# EUROPÄISCHE PATENTSCHRIFT

(11) **EP 3 860 868 B1**
(45) Veröffentlichungstag und Bekanntmachung des Hinweises auf die Patenterteilung: **27.05.2026**
(21) Anmeldenummer: 19778497.8
(22) Anmeldetag: 25.09.2019
(51) Int. Cl.: B60D 1/06, B60D 1/54

(54) **ANHÄNGEKUPPLUNG**
TRAILER COUPLING
ATTELAGE DE REMORQUE

(30) Priorität: 04.10.2018 DE 102018124518
(43) Veröffentlichungstag der Anmeldung: 11.08.2021
(73) Patentinhaber: ACPS Automotive GmbH, 74379 Ingersheim (DE)
(72) Erfinder: KADNIKOV, Aleksej, 71229 Leonberg (DE)
(74) Vertreter: Hoeger, Stellrecht & Partner Patentanwälte mbB
(86) Internationale Anmeldenummer: PCT/EP2019/075888
(87) Internationale Veröffentlichungsnummer: WO 2020/069936

(56) Entgegenhaltungen:
- EP-A1- 1 407 901
- EP-A1- 1 491 369
- EP-A1- 1 886 847
- EP-A1- 3 098 097
- EP-A1- 3 141 405
- EP-A1- 3 360 703
- EP-A2- 1 084 871
- EP-A2- 1 142 732
- DE-A1- 102004 004 503
- DE-A1- 102014 111 426
- DE-B4- 19 549 652

## Beschreibung

Die Erfindung betrifft eine Anhängekupplung umfassend eine Schwenklagereinheit mit einem an einer fahrzeugfesten Lagerbasis um eine Schwenkachse zwischen einer Arbeitsstellung und einer Ruhestellung verschwenkbar gelagerten Schwenklagerkörper, an welchem ein an einem zweiten Ende eine Kupplungskugel tragender Kugelhals mit einem ersten Ende gehalten ist, wobei an dem Schwenklagerkörper koaxial zur Schwenkachse ein Fortsatz angeordnet ist, welcher einen Durchlass der Lagerbasis durchgreift, dass der Schwenklagerkörper einen Formschlusskörper mit radial außerhalb des Fortsatzes angeordneten ersten Formschlusselementen umfasst, die in der Arbeitsstellung durch Verschieben des Schwenklagerkörpers parallel zur Schwenkachse zwischen einer Fixierstellung, in welcher die ersten Formschlusselemente mit an der Lagereinheit radial außerhalb des Fortsatzes angeordneten zweiten Formschlusselementen in Eingriff stehen, und einer Freigabestellung, in welcher die ersten Formschlusselemente und die zweiten Formschlusselemente außer Eingriff stehen, hin und her bewegbar sind, wobei der Schwenklagerkörper einen mit diesem zumindest in Richtung parallel zur Schwenkachse fest verbundenen Führungskörper mit Aufnahmen aufweist, in welchen Verriegelungskörper mit mindestens einer radial zur Schwenkachse verlaufenden Komponente bewegbar angeordnet sind, dass die Verriegelungskörper in den Aufnahmen von einer radial innenliegenden Lösestellung in eine radial über den Führungskörper überstehende Axialblockierstellung bewegbar sind und in der Axialblockierstellung an von der Lagerbasis getragenen Stützflächen anliegen, die so an der Lagerbasis angeordnet und ausgerichtet sind, dass die in der Axialblockierstellung stehenden Verriegelungskörper beim Anliegen an den Stützflächen die ersten und zweiten Formschlusselemente in der Fixierstellung halten.

Derartige Anhängekupplungen sind aus der DE 10 2004 004 503 A1 bekannt.

Bei derartigen Anhängekupplungen besteht das Problem, die Verschwenkbarkeit und die Fixierbarkeit des Schwenklagerkörpers mit möglichst einfachen Mitteln in möglichst kompakter Bauweise zu realisieren.

Diese Aufgabe wird bei einer Anhängekupplung der eingangs beschriebenen Art erfindungsgemäß dadurch gelöst, dass die ersten Formschlusselemente der Schwenkachse abgewandte erste Formschlussflächen aufweisen und die Gesamtheit der ersten Formschlussflächen so am Formschlusskörper angeordnet und ausgebildet ist, dass sie mit den zweiten Formschlusselementen lediglich in der Arbeitsstellung in Eingriff kommen können, so dass nur in dieser einen Schwenkstellung ein Bewegen des Schwenklagerkörpers von der Freigabestellung in die Fixierstellung möglich ist.

Der Vorteil der erfindungsgemäßen Lösung ist darin zu sehen, dass diese eine sehr kompakte Bauweise ermöglicht und außerdem einfach herstellbar ist.

Bei der erfindungsgemäßen Lösung kann die Schwenkachse relativ zu einer Längsmittelebene des Kraftfahrzeugs und somit auch einer Längsmittelebene der Anhängekupplung in unterschiedlichster Orientierung verlaufen.

Beispielsweise könnte die Schwenkachse senkrecht zur Längsmittelebene angeordnet sein.

Eine besonders vorteilhafte Lösung sieht jedoch vor, dass die Schwenkachse quer, insbesondere schräg zur Längsmittelebene der Anhängekupplung, ausgerichtet ist und somit die Möglichkeit eröffnet, eine Schwenkbewegung des Kugelhalses von einer ungefähr parallel zur Längsmittelebene ausgerichteten Arbeitsstellung in einer quer zur Längsmittelebene verlaufende Ruhestellung durchzuführen.

Besonders vorteilhaft ist es, wenn der Kugelhals in der Ruhestellung mit der Kupplungskugel in Richtung einer Fahrbahn weisend angeordnet ist, so dass der Kugelhals auf einer der Fahrbahn abgewandten Seite der Kupplungskugel verläuft und mit dieser in der Ruhestellung verbunden ist.

Hinsichtlich der Anordnung der Formschlusselemente relativ zum Formschlusskörper wurden bislang keine näheren Angaben gemacht.

So sieht eine vorteilhafte Lösung vor, dass die ersten Formschlusselemente an einer Außenkontur des Formschlusskörpers angeordnet sind.

Insbesondere sind die ersten Formschlusselemente stationär an dem Formschlusskörper angeordnet.

Vorzugsweise verlaufen dabei die ersten Formschlussflächen ausschließlich der Schwenkachse abgewandt.

Besonders günstig ist es, wenn jede der ersten Formschlussflächen in einer Umlaufrichtung um die Schwenkachse einen radial variierenden Konturverlauf aufweist, das heißt, dass die ersten Formschlussflächen nicht auf einer zur Schwenkachse koaxialen geometrischen Zylinderfläche liegen, sondern von einer derartigen Zylinderfläche abweichend ausgebildet sind und dadurch einen radial variierenden Konturverlauf aufweisen.

Ferner ist es günstig, wenn die ersten Formschlusselemente in unterschiedlichen um die Schwenkachse herum angeordneten Bogensegmenten die ersten Formschlussflächen bilden.

Dabei können die Bogensegmente Kreisbogensegmente sein oder auch parabolisch oder andersartig geformte Bogensegmente, das entscheidende Kriterium dieser Bogensegmente ist, dass diese eine stärkere Krümmung aufweisen als eine durch einen Scheitelpunkt der Bogensegmente hindurch verlaufende Kreisbahn um die Schwenkachse.

Insbesondere lässt sich ein vorteilhafter Formschluss dann herstellen, wenn jede der Formschlussflächen in Richtung parallel zur Schwenkachse einen radial variierenden Konturverlauf aufweist.

Insbesondere ist in diesem Zusammenhang vorgesehen, dass die ersten Formschlussflächen in diese schneidenden und durch die Schwenkachse hindurch verlaufenden geometrischen Ebenen zumindest abschnittsweise in einem stumpfen Winkel zur Schwenkachse verlaufen.

Hinsichtlich der Ausbildung der zweiten Formschlusselemente wurden bislang keine näheren Angaben gemacht.

So sieht eine vorteilhafte Lösung vor, dass die zweiten Formschlusselemente an einer Innenkontur eines Formschlusselemententrägers angeordnet sind.

Vorzugsweise ist dabei vorgesehen, dass die zweiten Formschlusselemente den ersten Formschlusselementen zugewandte zweite Formschlussflächen aufweisen.

Insbesondere sind dabei die zweiten Formschlussflächen der Schwenkachse zugewandt angeordnet.

Besonders günstig ist es, wenn die zweiten Formschlussflächen in einer Umlaufrichtung um die Schwenkachse einen radial variierenden Konturverlauf aufweisen, das heißt, dass die Formschlussflächen von einer konzentrisch um die Schwenkachse umlaufenden geometrischen Zylinderfläche abweichend ausgebildet sind.

Insbesondere ist vorgesehen, dass die zweiten Formschlussflächen in unterschiedlichen um die Schwenkachse herum angeordneten Bogensegmenten zweite Formschlussflächen bilden.

Auch bei den zweiten Formschlussflächen ist vorzugsweise vorgesehen, dass diese eine den ersten Formschlussflächen in Richtung parallel zur Schwenkachse entsprechenden radial variierenden Konturverlauf aufweisen.

Insbesondere ist vorgesehen, dass die zweiten Formschlussflächen in diese schneidenden und durch die Schwenkachse hindurch verlaufenden geometrischen Ebenen zumindest abschnittsweise mit der Schwenkachse einen spitzen Winkel einschließen.

Hinsichtlich der Anordnung des Formschlusskörpers relativ zum Fortsatz wurden bislang keine näheren Angaben gemacht.

So sieht alternativ oder ergänzend zu den vorstehend beschriebenen Lösungen eine vorteilhafte Ausführungsform vor, dass der Formschlusskörper um den Fortsatz umlaufend ausgebildet ist.

Ferner ist vorzugsweise vorgesehen, dass der Formschlusskörper an einem sich radial über den Fortsatz hinaus erstreckenden Bereich des Schwenklagerkörpers angeordnet ist, so dass der Formschlusskörper nicht durch den Durchlass an der Lagerbasis hindurch bewegbar ist, sondern insbesondere mindestens mit einem Teilbereich in den Durchlass hinein bewegbar ist, um die ersten Formschlusselemente in Eingriff mit den zweiten Formschlusselementen zu bringen.

Vorzugsweise ist der Formschlusskörper so angeordnet, dass er mit dem an der Lagerbasis vorgesehenen Formschlusselemententräger zusammenwirkt, wobei der Formschlusselemententräger auf einer dem Formschlusskörper zugewandten Seite der Lagerbasis, insbesondere an eine Außenseite der Lagerbasis angrenzend, in der Lagerbasis ausgebildet ist.

Hinsichtlich der Anordnung des Führungskörpers wurden im Zusammenhang mit der bisherigen Erläuterung der erfindungsgemäßen Lösung keine näheren Angaben gemacht.

So ist alternativ oder ergänzend zu den vorstehend beschriebenen Lösungen vorgesehen, dass der Führungskörper drehfest mit dem Schwenklagerkörper verbunden ist.

Besonders günstig ist es dabei, wenn der Fortsatz den Führungskörper umfasst, so dass der Führungskörper integraler Teil des Fortsatzes ist.

Insbesondere ist es im Rahmen der erfindungsgemäßen Lösung von Vorteil, wenn der Führungskörper hülsenförmig ausgebildet ist.

Ferner wurden hinsichtlich der Lagerung des Schwenklagerkörpers an der Lagerbasis keine weiteren Angaben gemacht.

So sieht alternativ oder ergänzend zu den vorstehend beschriebenen Lösungen eine vorteilhafte Lösung vor, dass der Schwenklagerkörper mittels des Fortsatzes an der Lagerbasis um die Schwenkachse schwenkbar gelagert ist.

Insbesondere lässt sich dies dadurch realisieren, dass der Fortsatz auf einer dem Formschlusskörper des Schwenklagerkörpers abgewandten Seite einen Führungsbereich aufweist, mit welchem dieser relativ zur Lagerbasis um die Schwenkachse schwenkbar gelagert ist.

Ferner ist alternativ oder ergänzend zu den vorstehend beschriebenen Lösungen vorgesehen, dass der Schwenklagerkörper einen Führungskörper aufweist, mit welchem dieser relativ zur Lagerbasis um die Schwenkachse verschwenkbar gelagert ist.

Dabei ist der Führungskörper vorzugsweise auf einer dem Führungsbereich gegenüberliegenden Seite des Schwenklagerkörpers angeordnet.

Insbesondere liegen der Führungskörper und der Führungsbereich auf unterschiedlichen Seiten der Lagerbasis.

Beispielsweise ist der Führungskörper neben dem Formschlusskörper angeordnet.

Insbesondere ist dabei vorgesehen, dass der Führungskörper an einem an der Lagerbasis gehaltenen Lagerring gelagert ist.

Dabei ist beispielsweise der Lagerring an der Lagerbasis angeordnet und liegt radial außerhalb des Formschlusselemententrägers.

Beispielsweise steht dabei der Lagerring über die Außenseite der Lagerbasis über.

Hinsichtlich der Anordnung der Stützflächen relativ zur Lagerbasis wurden im Zusammenhang mit den bisherigen Ausführungsbeispielen keine näheren Angaben gemacht.

So sieht alternativ oder ergänzend zu den vorstehend beschriebenen Lösungen eine vorteilhafte Lösung vor, dass die Stützflächen an einer der Lagerbasis angeordneten Stützeinheit angeordnet sind.

Die Stützeinheit kann grundsätzlich an beliebiger Stelle der Lagerbasis angeordnet sein.

Vorzugsweise ist jedoch vorgesehen, dass die Stützeinheit auf einer dem Formschlusselemententräger gegenüberliegenden Seite der Lagerbasis angeordnet ist, so dass die Lagerbasis auf einer Seite den Formschlusselemententrägern auf der gegenüberliegenden Seite die Stützeinheit trägt und somit einerseits der Lagerbasis auf diese die von dem Formschlusskörper über die ersten Formschlusselemente auf den Formschlusselemententräger wirkenden Kräfte wirksam sind und auf der gegenüberliegenden Seite die diesen Kräften entgegengesetzten Kräfte von den Verriegelungskörpern auf die Stützeinheit einwirken.

Dabei kann die Stützeinheit in unterschiedlicher Art und Weise ausgebildet werden.

Beispielsweise kann die Stützeinheit als ein einheitlicher Ring ausgebildet werden, der die Stützflächen trägt.

Besonders vorteilhaft ist es jedoch, wenn die Stützeinheit aus mindestens zwei Abstützsegmenten, vorzugsweise drei Abstützsegmenten, gebildet ist.

Eine derartige Stützeinheit hat den Vorteil, dass sie sich in einfacher Weise montieren lässt.

Ein weiterer Vorteil einer derartigen Stützeinheit ist, dass die Abstützsegmente durch Trennstellen getrennt sind und dass diese insbesondere an die Trennstellen angrenzende Stützflächen aufweisen.

Eine derartige Ausbildung der Stützeinheit mit den Abstützsegmenten hat den Vorteil, dass keine punktuellen Belastungen durch die Verriegelungskörper auf die Stützeinheit wirken, sondern die Belastungen der Verriegelungskörper sich auf einander angrenzende Abstützsegmente verteilen lassen.

Insbesondere ist hierbei vorgesehen, dass die Verriegelungskörper auf die Stützeinheit im Bereich einer Trennstelle zwischen zwei Abstützsegmenten wirken und sich an beiderseits der Trennstelle angeordneten Stützflächen der Abstützsegmente abstützen.

Eine weitere vorteilhafte Ausbildung der Stützeinheit sieht vor, dass sich diese so ausbilden lässt, dass sie zusammen mit einem sich an den Fortsatz auf einer dem Formschlusskörper abgewandten Seite angeordneten Führungsbereich, insbesondere ausgebildet als Wulst, den Schwenklagerkörper gegen ein Herausbewegen aus dem Durchlass und somit gegen ein Lösen von der Lagerbasis sichert.

Somit ist der Schwenklagerkörper einerseits durch das Zusammenwirken des Formschlusskörpers mit dem Formschlusselemententräger und andererseits durch das Zusammenwirken der Stützeinheit mit dem Führungsbereich relativ zur Lagerbasis so festgelegt, dass dieser nur zwischen der Fixierstellung und der Freigabestellung bewegbar ist.

Hinsichtlich der Einwirkung auf die Verriegelungskörper wurden bislang keine näheren Angaben im Zusammenhang mit der erfindungsgemäßen Lösung gemacht.

So sieht alternativ oder ergänzend zu den vorstehenden Lösungen eine vorteilhafte Lösung vor, dass in dem Führungskörper ein Betätigungskörper für die Verriegelungskörper angeordnet ist, so dass der Führungskörper den Betätigungskörper zumindest teilweise insbesondere ganz umgibt.

Besonders günstig ist es dabei, wenn der Betätigungskörper relativ zu dem Führungskörper bewegbar ist und eine Betätigungskontur aufweist, um die Verriegelungskörper von der Lösestellung in die Axialblockierstellung und umgekehrt zu bewegen.

Insbesondere ist dabei vorgesehen, dass die Betätigungskontur des Betätigungskörpers Betätigungsflächen aufweist, deren Abstand von der Schwenkachse variiert, so dass die Verriegelungskörper beim Anliegen an einer radial innen liegenden Betätigungsfläche in der Lösestellung und beim Anliegen an einer radial außen liegenden Betätigungsfläche in der Axialblockierstellung stehen.

Ferner ist vorzugsweise vorgesehen, dass der Betätigungskörper eine mit zunehmender Erstreckung in Richtung der Schwenkachse in einem zunehmenden radialen Abstand von der Schwenkachse verlaufende Betätigungsfläche aufweist, an der die Verriegelungskörper in der Axialblockierstellung anliegen.

Das heißt, dass insbesondere in der Axialblockierstellung die Möglichkeit besteht, durch die derart zur Schwenkachse verlaufende Betätigungsfläche bei Beaufschlagung des Betätigungskörpers eine Kraft auf die Verriegelungskörper einwirken zu lassen.

Insbesondere ist vorgesehen, dass durch die Bewegung des Betätigungskörpers die Verriegelungskörper von der Lösestellung in die Axialblockierstellung und umgekehrt bewegbar sind.

Hinsichtlich der Führung des Betätigungskörpers sind die unterschiedlichsten Möglichkeiten denkbar.

Eine vorteilhafte Lösung sieht vor, dass der Betätigungskörper an dem Führungskörper bewegbar geführt ist, so dass der Führungskörper gleichzeitig nicht nur eine Führung für die Verriegelungskörper bildet, sondern auch eine Führung für den Betätigungskörper.

Prinzipiell könnte der Betätigungskörper um die Schwenkachse drehbar angeordnet sein, um die Verriegelungskörper von der Lösestellung in die Axialblockierstellung oder umgekehrt zu bewegen.

Eine einfach zu realisierende Lösung sieht vor, dass der Betätigungskörper in Richtung parallel zur Schwenkachse relativ zu den Verriegelungskörpern bewegbar ist, wobei insbesondere durch die Bewegung des Betätigungskörpers die Verriegelungskörper von der Lösestellung in die Axialblockierstellung und umgekehrt bewegbar sind.

Eine vorteilhafte Lösung sieht vor, dass der Betätigungskörper durch einen Verschiebeantrieb in Richtung parallel zur Schwenkachse verschiebbar ist.

Dabei kann der Verschiebeantrieb ein beliebiger Verschiebeantrieb, beispielsweise durch einen Federkraftspeicher betätigbarer Verschiebeantrieb sein.

Eine besonders vorteilhafte Ausbildung des Verschiebeantriebs sieht vor, dass der Verschiebeantrieb ein Spindelantrieb ist.

Im Falle der Ausbildung des Verschiebeantriebs als Spindelantrieb ist vorzugsweise vorgesehen, dass der Spindelantrieb eine Antriebsspindel und eine parallel zur Schwenkachse bewegbare Spindelmutter zur Bewegung des Betätigungskörpers aufweist.

Dabei kann die Antriebsspindel mit der Spindelmutter auf einer Seite des Betätigungskörpers angeordnet sein.

Eine besonders kompakt bauende Lösung sieht allerdings vor, dass die Antriebsspindel einen Durchlass des Betätigungskörpers durchsetzt.

Damit lässt sich beispielsweise der Betätigungskörper zwischen der Spindelmutter und einer Antriebsseite der Antriebsspindel anordnen.

Vorzugsweise liegt dabei die Spindelmutter in einem Innenraum des Schwenklagerkörpers, und insbesondere zwischen einer den Innenraum des Schwenklagerkörpers begrenzenden Anschlagfläche und dem Betätigungskörper.

Hinsichtlich der Einwirkung der Spindelmutter auf den Betätigungskörper sind die unterschiedlichsten Lösungen denkbar.

Eine vorteilhafte Lösung sieht vor, dass die Spindelmutter starr mit dem Betätigungskörper gekoppelt ist, so dass die Spindelmutter und der Betätigungskörper zwei miteinander gekoppelte Teile oder als ein zusammenhängendes Teil ausgebildet sein können.

Eine andere vorteilhafte Lösung sieht vor, dass die Spindelmutter über ein federelastisches Element auf den Betätigungskörper einwirkt, insbesondere dann, wenn die Spindelmutter den Betätigungskörper in der Axialblockierstellung hält, so dass durch das federelastische Element eine permanente Krafteinwirkung auf den Betätigungskörper dann realisiert werden kann, wenn die Spindelmutter das federelastische Element in einem komprimierten oder gespannten Zustand hält.

Besonders vorteilhaft ist es, wenn beim Verfahren der Spindelmutter von der Lösestellung in die Axialblockierstellung der Betätigungskörper ebenfalls von der Lösestellung in die Axialblockierstellung verfahren wird und insbesondere bei Vorsehen des federelastischen Elements ein Komprimieren oder Spannen des federelastischen Elements erfolgt, so dass das federelastische Element bei in der Axialblockierstellung feststehender, das heißt nicht bewegter Spindelmutter stets mit einer Kraftwirkung auf den Betätigungskörper einwirkt.

Darüber hinaus ist vorgesehen, dass beim Verfahren der Spindelmutter von der Axialblockierstellung in die Lösestellung der Betätigungskörper durch mindestens einen zwischen der Spindelmutter und dem Betätigungskörper wirksamen Kopplungskörper von der Axialblockierstellung in die Lösestellung verfahren wird.

Um sicherzustellen, dass sich auch der Schwenklagerkörper von der Fixierstellung in die Freigabestellung bewegt, ist vorzugsweise vorgesehen, dass der Betätigungskörper und/oder die Spindelmutter im Anschluss an ein Verfahren von der Axialblockierstellung in die Lösestellung auf den Schwenklagerkörper wirkt, um diesen von der Fixierstellung in die um die Schwenkachse drehbare Freigabestellung zu bewegen.

Eine weitere vorteilhafte Lösung sieht vor, dass der Betätigungskörper und/oder die Spindelmutter im Anschluss an ein Verfahren von der Freigabestellung in Richtung der Fixierstellung auf den Schwenklagerkörper wirkt, um diesen von der Lösestellung in die Axialblockierstellung zu bewegen.

Hinsichtlich der Einleitung der Schwenkbewegung des Schwenklagerkörpers wurden im Zusammenhang mit der bisherigen Erläuterung der erfindungsgemäßen Lösung keine näheren Angaben gemacht.

Prinzipiell wäre es denkbar, die Schwenkbewegung des Schwenklagerkörpers in der Freigabestellung manuell durchzuführen, so dass durch eine manuelle Verschwenkung von der Arbeitsstellung in die Ruhestellung und umgekehrt diese Stellungen erreicht werden können.

Eine besonders günstige Lösung sieht vor, dass mit dem Spindelantrieb in der Freigabestellung ein Verschwenken des Schwenklagerkörpers von der Arbeitsstellung in die Ruhestellung erfolgt.

Ferner sieht eine weitere vorteilhafte Lösung vor, dass mit dem Spindelantrieb in der Freigabestellung ein Verschwenken des Schwenklagerkörpers von der Ruhestellung in die Arbeitsstellung erfolgt.

Das Verschwenken des Schwenklagerkörpers mittels des Spindelantriebs ist besonders einfach dann erreichbar, wenn dieses aufgrund einer Blockierung einer Verschiebung der drehfest an oder in dem Schwenklagerkörper angeordneten Spindelmutter erfolgt.

Insbesondere ist hierzu vorgesehen, dass die Blockierung der Verschiebung der Spindelmutter in der Freigabestellung erfolgt.

Insbesondere kann in der Freigabestellung bei Erreichen derselben durch eine Blockierung einer weiteren Verschiebung in einer zur Freigabestellung hinführenden Ausrückrichtung eine Schwenkbewegung von der Arbeitsstellung in die Ruhestellung und insbesondere auch in der Freigabestellung beim Versuch dieselbe in Einrückrichtung zu verlassen durch eine Blockierung einer weiteren Verschiebung in einer von der Freigabestellung weg führenden Einrückrichtung einer Schwenkbewegung von der Ruhestellung in die Arbeitsstellung erfolgen.

Dies kann beispielsweise dadurch erfolgen, dass beim Bewegen des Betätigungskörpers und/oder der Spindelmutter in der Ausrückrichtung, das heißt in Richtung von der Fixierstellung in die Freigabestellung, der Betätigungskörper und/oder die Spindelmutter in der Freigabestellung gegen eine Anschlagfläche des Schwenklagerkörpers wirken und somit die Drehbewegung des Spindelantriebs auf den Schwenklagerkörper übertragen, um somit den Schwenklagerkörper beispielsweise von der Arbeitsstellung in die Ruhestellung zu verschwenken.

Eine weitere vorteilhafte Lösung sieht vor, dass in der Freigabestellung des Schwenklagerkörpers beim Bewegen des Betätigungskörpers und/oder der Spindelmutter in der Einrückrichtung, das heißt in Richtung der Fixierstellung, aufgrund der nach wie vor bestehenden Freigabestellung des Schwenklagerkörpers der Betätigungskörper und/oder die Spindelmutter nicht die Möglichkeit haben, die Verriegelungskörper in Richtung der Axialblockierstellung zu bewegen sondern in der Lösestellung blockiert sind, so dass dadurch die Blockade der Bewegung des Betätigungskörpers und/oder der Spindelmutter in der Freigabestellung des Schwenklagerkörpers erfolgt und somit der Spindelantrieb insbesondere in der Lage ist, die Drehbewegung des Spindelantriebs auf den Schwenklagerkörper zu übertragen, so dass dieser insbesondere von der Ruhestellung in die Arbeitsstellung bewegt wird und in dieser dann die Möglichkeit hat, sich aufgrund der Einwirkung des Betätigungskörpers und/oder der Spindelmutter von der Freigabestellung in Richtung der Fixierstellung zu bewegen, wobei wiederum dann der Betätigungskörper und/oder die Spindelmutter die Möglichkeit haben, sich von der Lösestellung in die Axialblockierstellung zu bewegen.

Hinsichtlich der Fixierung des Schwenklagerkörpers insbesondere in der Arbeitsstellung und/oder der Ruhestellung ist alternativ oder ergänzend zu den vorstehend beschriebenen Lösungen vorgesehen, dass der Schwenklagerkörper durch eine Fixiereinheit relativ zur Lagerbasis fixierbar ist.

Die Fixiereinheit ist insbesondere so ausgebildet, dass diese den Schwenklagerkörper in der um die Schwenkachse schwenkbaren Freigabestellung relativ zur Lagerbasis in der Ruhestellung fixierend ausgebildet ist, so dass in der Ruhestellung die ersten und zweiten Formschlusselemente unwirksam sein können und in der Freigabestellung verbleiben können.

Es besteht aber auch die Möglichkeit, die Fixiereinheit so auszubilden, dass diese den Schwenklagerkörper in der um die Schwenkachse schwenkbaren Freigabestellung relativ zur Lagerbasis in der Arbeitsstellung fixierend ausgebildet ist.

Diese Lösung hat insbesondere den Vorteil, dass damit bereits in der Freigabestellung die Möglichkeit besteht, den Schwenklagerkörper durch die Fixiereinheit zu fixieren und anschließend von der Freigabestellung in die Fixierstellung zu bewegen.

Weitere Merkmale und Vorteile der erfindungsgemäßen Lösung sind Gegenstand der nachfolgenden Beschreibung sowie der zeichnerischen Darstellung einiger Ausführungsbeispiele.

In der Zeichnung zeigen:
- Fig. 1: eine Seitenansicht eines Kraftfahrzeugs mit einer erfindungsgemäßen Anhängekupplung;
- Fig. 2: eine Ansicht der Anhängekupplung von einer Rückseite des Fahrzeugs in Fahrtrichtung gesehen, wobei ein Kugelhals der Anhängekupplung in der Arbeitsstellung steht und die Ruhestellung gestrichelt dargestellt ist;
- Fig. 3: eine Darstellung der Anhängekupplung mit Blick in Richtung des Pfeils X in Fig. 2;
- Fig. 4: eine Darstellung der Anhängekupplung in der Ruhestellung;
- Fig. 5: eine Darstellung der Anhängekupplung in der Ruhestellung mit Blick in Richtung des Pfeils X in Fig. 4;
- Fig. 6: eine ausschnittsweise Darstellung der erfindungsgemäßen Anhängekupplung, umfassend einen Kugelhals mit einer Kupplungskugel und einen Schwenklagerkörper sowie eine Anordnung derselben relativ zu einer Lagerbasis und Bogensegmenten einer Stützeinheit vor deren Montage;
- Fig. 7: eine vergrößerte Darstellung des Schwenklagerkörpers in einer Fixierstellung relativ zur Lagerbasis und einer schematischen Darstellung einer Montage der Bogensegmente der Stützeinheit;
- Fig. 8: eine Draufsicht auf einen Formschlusskörper des Schwenklagerkörpers;
- Fig. 9: eine Seitenansicht des Schwenklagerkörpers mit dem Formschlusskörper und einem Führungskörper;
- Fig. 10: eine Draufsicht auf die Lagerbasis im Bereich eines Formschlusselemententrägers gebildet durch die Lagerbasis;
- Fig. 11: einen Schnitt längs Linie 11-11 in Fig. 10;
- Fig. 12: einen Schnitt längs Linie 12-12 in Fig. 14;
- Fig. 13: einen Längsschnitt durch ein erstes Ausführungsbeispiel einer erfindungsgemäßen Schwenklagereinheit in einer Freigabestellung;
- Fig. 14: einen Schnitt durch das erste Ausführungsbeispiel der erfindungsgemäßen Schwenklagereinheit in einer Fixierstellung;
- Fig. 15: einen Schnitt ähnlich Fig. 14 durch das erste Ausführungsbeispiel der erfindungsgemäßen Schwenklagereinheit in der Fixierstellung in einer durch einen Verriegelungskörper verlaufenden Schnittebene 15-15 in Fig. 16;
- Fig. 16: einen Schnitt längs Linie 16-16 in Fig. 15;
- Fig. 17: einen Schnitt durch das erste Ausführungsbeispiel der erfindungsgemäßen Schwenklagereinheit längs Linie 17-17 in Fig. 18;
- Fig. 18: einen Schnitt längs Linie 18-18 in Fig. 17;
- Fig. 19: einen Schnitt längs Linie 19-19 in Fig. 21;
- Fig. 20: einen Schnitt längs Linie 20-20 in Fig. 22;
- Fig. 21: einen Schnitt längs Linie 21-21 in Fig. 19;
- Fig. 22: einen Schnitt längs Linie 22-22 in Fig. 20;

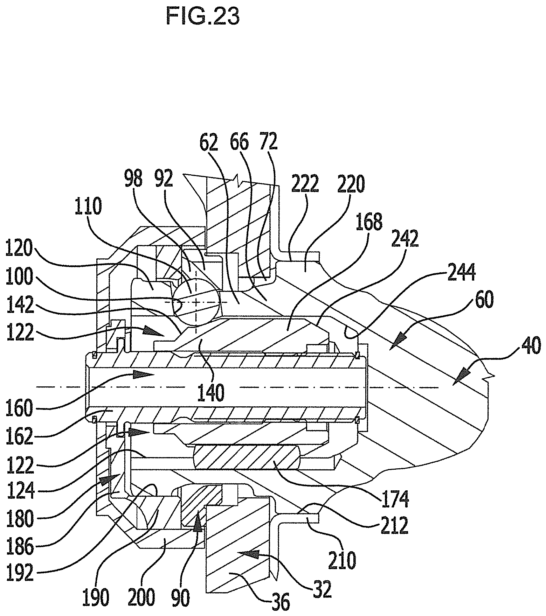

- Fig. 23: einen Schnitt durch ein zweites Ausführungsbeispiel der erfindungsgemäßen Schwenklagereinheit ähnlich Fig. 15 und
- Fig. 24: einen Schnitt durch das zweite Ausführungsbeispiel der erfindungsgemäßen Schwenklagereinheit ähnlich Fig. 17.

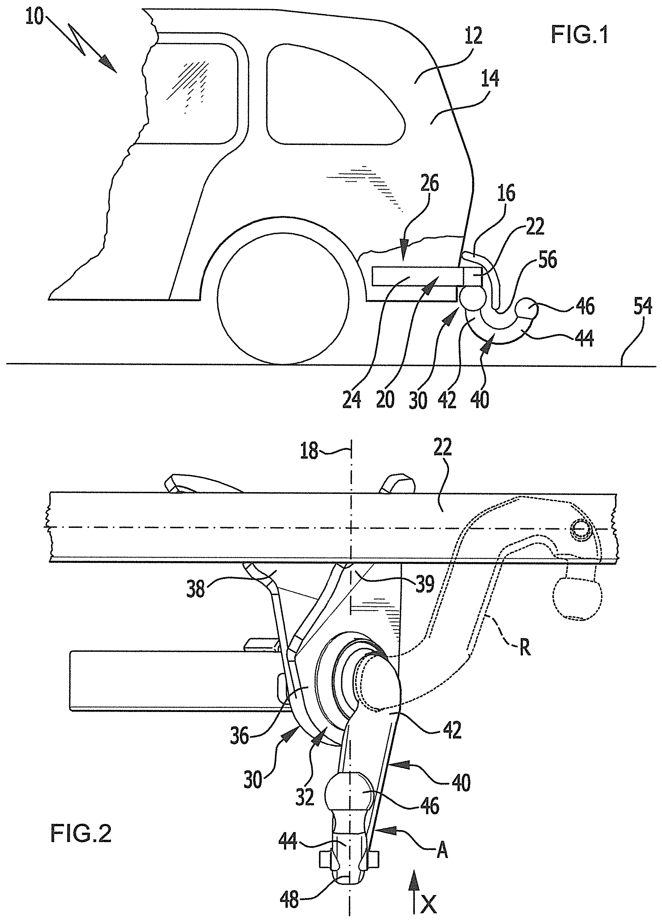

Ein in Fig. 1 dargestelltes, als Ganzes mit 10 bezeichnetes Kraftfahrzeug umfasst eine Fahrzeugkarosserie 12, an welcher an einem Heckbereich 14 eine erfindungsgemäße Anhängekupplung 20 montiert ist, welche einen von einer Stoßfängereinheit 16 abgedeckten und sich quer zu einer Längsmittelebene 18 der Fahrzeugkarosserie 12 und der Anhängekupplung 20 und quer zum Heckbereich 14 erstreckenden Querträger 22 sowie sich ungefähr parallel zur Längsmittelebene 18 der Fahrzeugkarosserie 12 entlang von Karosseriewandabschnitten erstreckende und an diesen fixierte Seitenträger 24 aufweist, die zusammen mit dem Querträger 22 eine relativ zum Heckbereich 14 fahrzeugfest angeordnete Halteeinheit 26 bilden, welche zum Teil durch die Fahrzeugkarosserie 12 und zum Teil durch die Stoßfängereinheit 16 abgedeckt ist.

An der Halteeinheit 26 ist eine als Ganzes mit 30 bezeichnete Schwenklagereinheit vorgesehen, mit welcher ein als Ganzes mit 40 bezeichneter Kugelhals mit einem ersten Ende 42 verbunden ist, der außerdem an einem zweiten Ende 44 eine als Ganzes mit 46 bezeichnete Kupplungskugel trägt, wie in Fig. 1 und 2 dargestellt.

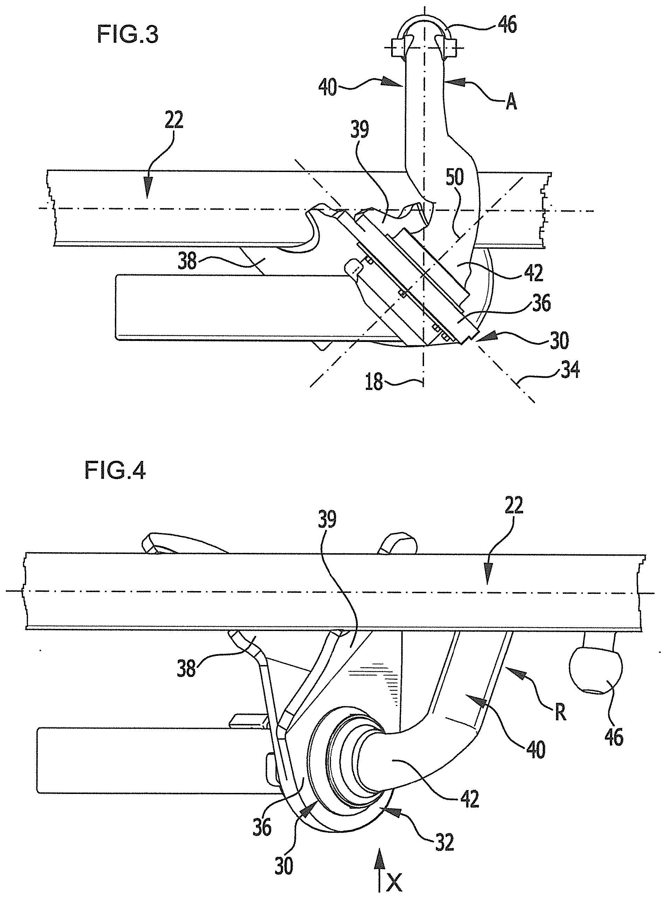

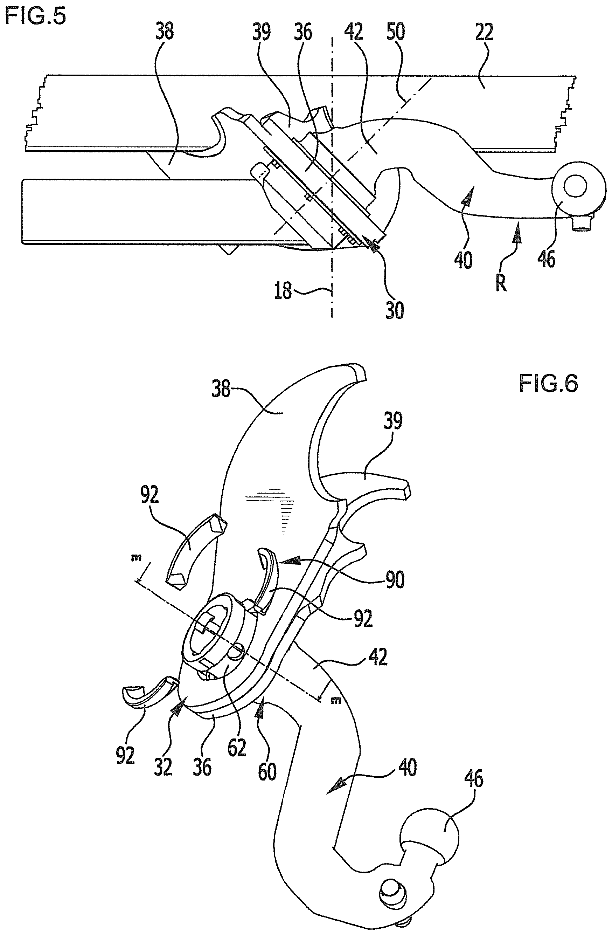

Durch die Schwenklagereinheit 30 besteht die Möglichkeit, den Kugelhals 40, von einer in Fig. 1 bis 3 dargestellten Arbeitsstellung A, in welcher eine Kugelmittelachse 48 der Kupplungskugel 46 in einer Fahrzeuglängsmittelebene 18 steht, um eine quer, insbesondere schräg, vorzugsweise in einem spitzen Winkel zur Längsmittelebene 18 der Fahrzeugkarosserie und auch der Anhängekupplung 20 verlaufende Schwenkachse 50 in eine in Fig. 4 und 5 dargestellte Ruhestellung R zu verschwenken, in welcher ein Mittelabschnitt 52 des Kugelhalses sich quer zur Fahrzeuglängsmittelebene FL erstreckt und die Kupplungskugel 46 seitlich der Fahrzeuglängsmittelebene FL liegt (Fig. 4 und 5).

Vorzugsweise ist dabei der Kugelhals 40 in der Ruhestellung R in einer durch die Stoßfängereinheit 16 der Fahrzeugkarosserie 12 abgedeckten Stellung seitlich der Fahrzeuglängsmittelebene 18 angeordnet und - je nach Ausrichtung der Schwenkachse 50 - liegt der Kugelhals 40 auf einer einer Fahrbahn 54 abgewandten Seite der Kupplungskugel 46, so dass die Kupplungskugel 46 zur Fahrbahn 54 weist, oder der Kugelhals 40 liegt zumindest in einem derartigen Abstand von der Fahrbahn 54, dass er höher liegt als eine Unterkante 56 der Stoßfängereinheit 16 von der Fahrbahn 54.

Wie in Fig. 5 bis 7 dargestellt, umfasst die als Ganzes mit 30 bezeichnete Schwenklagereinheit eine Lagerbasis 32, die an der Halteeinheit 26 so angeordnet ist, dass die Schwenkachse 50 senkrecht zu einer Ebene 34 verläuft, in welcher sich ein Flanschkörper 36 der Lagerbasis 32 erstreckt.

Der Flanschkörper 36 ist vorzugsweise durch zwei Y-förmig zueinander verlaufende Stützstege 38 und 39 mit dem Querträger 22 verbunden, wobei die Stützstege 38 und 39 beispielsweise mit dem Querträger verschweißt sind.

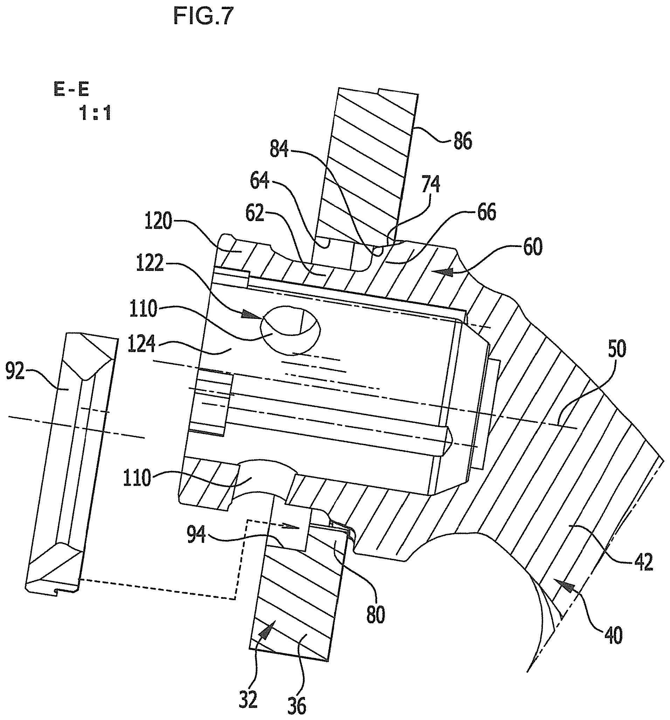

Die Schwenklagereinheit 30 umfasst, wie in Fig. 6 und 7 dargestellt, einen mit dem ersten Ende 42 des Kugelhalses 40 fest verbundenen Schwenklagerkörper 60, welcher vorzugsweise einstückig an den Kugelhals 40 angeformt ist und welcher relativ zur Lagerbasis 32 um die Schwenkachse 50 drehbar und in Richtung der Schwenkachse 50 axial verschiebbar ist, wie nachfolgend im Detail beschrieben.

Der Schwenklagerkörper 60 umfasst dabei einen als Ganzes mit 62 bezeichneten Fortsatz, welcher einen Durchlass 64 des Flanschkörpers 36 der Lagerbasis 32 durchgreift und einen Formschlusskörper 66.

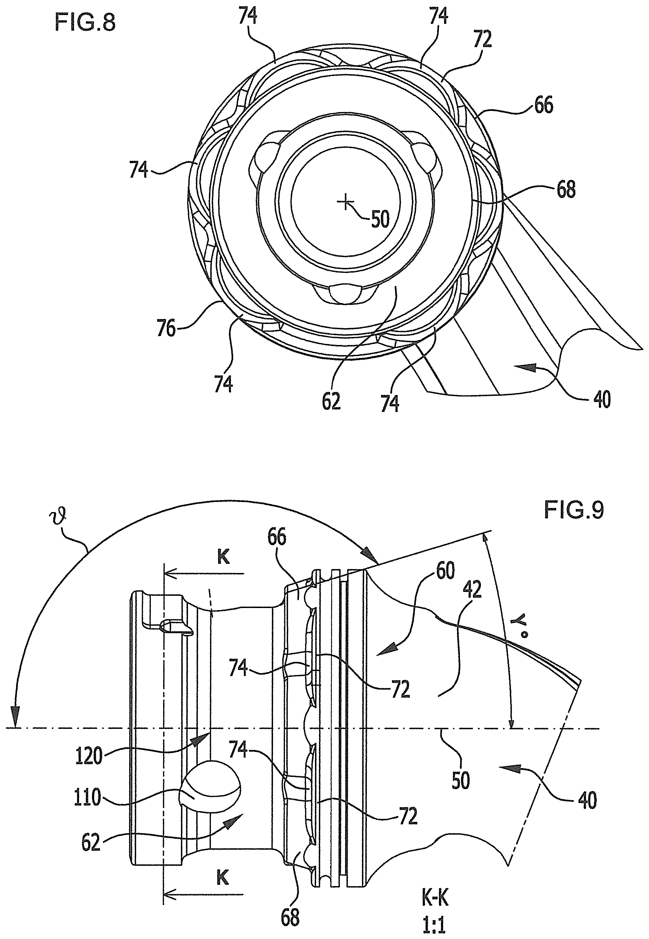

Der Formschlusskörper 66 umfasst einen Grundkörper 68, der in Bereichen seiner größten radialen Ausdehnung eine Vielzahl von ersten Formschlusselementen 72 bildet, die, wie in Fig. 8 und 9 dargestellt, beispielsweise in einem größeren radialen Abstand von der Schwenkachse 50 angeordnet sind als der Fortsatz 62.

Beispielsweise umfassen die ersten Formschlusselemente 72 in Umlaufrichtung um die Schwenkachse 50 als Bogensegmente ausgebildete Formschlussflächen 74, die außerdem mit zunehmendem Abstand von dem Fortsatz 62 relativ zur Schwenkachse 50 konisch erweiternd verlaufen, wobei eine Krümmung der bogenförmigen Formschlussflächen 74 wesentlich größer ist als eine Krümmung einer die Formschlussflächen 74 außenliegend in ihren Scheitelpunkten berührenden geometrischen Kreisbahn 76 um die Schwenkachse 50.

Ferner ist es vorgesehen, dass die ersten Formschlusselemente 72 in unterschiedlichen um die Schwenkachse 50 herum angeordneten Bogensegmenten die ersten Formschlussflächen 74 bilden.

Dabei können die Bogensegmente Kreisbogensegmente sein oder auch parabolisch oder andersartig geformte Bogensegmente, das entscheidende Kriterium dieser Bogensegmente ist, dass diese eine stärkere Krümmung aufweisen als eine durch einen Scheitelpunkt der Bogensegmente hindurch verlaufende Kreisbahn 76 um die Schwenkachse 50.

Beispielsweise ist der Radius der bogenförmigen Flächen 74 kleiner als die Hälfte des Radius des Fortsatzes 62 und größer als ein Fünftel des Radius des Fortsatzes 62.

Insbesondere lässt sich ein vorteilhafter Formschluss dann herstellen, wenn jede der ersten Formschlussflächen 74 in Richtung parallel zur Schwenkachse 50 einen radial variierenden Konturverlauf aufweist.

Insbesondere ist in diesem Zusammenhang vorgesehen, dass die ersten Formschlussflächen 74 in diese schneidenden und durch die Schwenkachse 50 hindurch verlaufenden geometrischen Ebenen, beispielsweise der Zeichenebene in Fig. 9, zumindest abschnittsweise in einem stumpfen Winkel ϑ von 180° - γ° zur Schwenkachse 50 verlaufen.

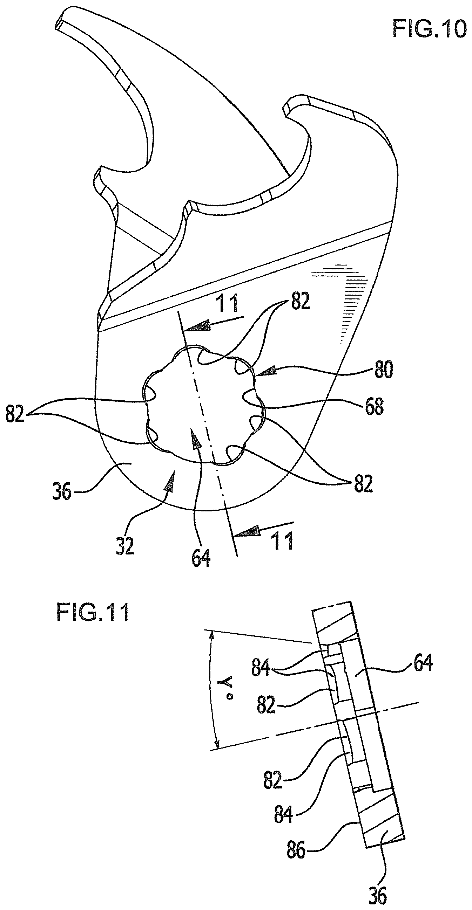

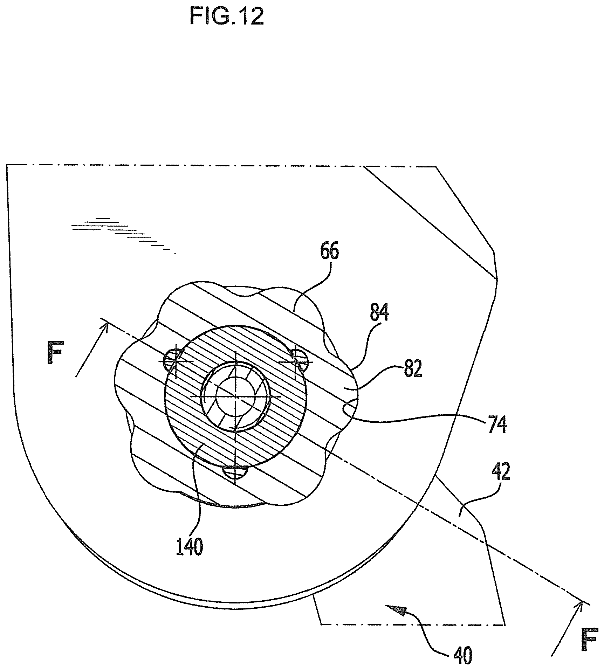

Zur Aufnahme der ersten Formschlusselemente sind, wie in den Fig. 10 und 11 dargestellt, im Bereich des Durchlasses 64 an einer dem Formschlusskörper 66 zugewandten Innenkontur 68 eines von der Lagerbasis 32 und insbesondere dem Flanschkörper 36 umfassten Formschlusselemententrägers 80 zweite Formschlusselemente 82 vorgesehen, welche ebenfalls, wie insbesondere in Fig. 11 dargestellt, in Umlaufrichtung um die Schwenkachse 50 als Bogensegmente ausgebildete und der Schwenkachse 50 zugewandte Formschlussflächen 84 umfassen, die sich außerdem in Richtung zu einer dem Kugelhals 40 zugewandten Außenseite 86 des Flanschkörpers 36 mit einem spitzen Winkel γ° relativ zur Schwenkachse 50 konisch erweitern, wobei eine Krümmung und der Konuswinkel der als Bogensegmente ausgebildeten Formschlussflächen 84 komplementär zu der Krümmung und dem Konuswinkel der als Bogensegmente ausgebildeten Formschlussflächen 74 sind, so dass die bogenförmigen Formschlussflächen 74 flächig an den bogenförmigen Formschlussflächen 84 zur Anlage bringbar sind, wenn der Formschlusskörper 66 in einer in Fig. 7 und Fig. 12 dargestellten Fixierstellung steht, in welcher die ersten Formschlusselemente 72 und die zweiten Formschlusselemente 82 ineinander greifen.

Vorzugsweise ist die Anordnung der ersten und zweiten Formschlusselemente 72, 82 so gewählt, dass diese nur in einer, insbesondere der Arbeitsstellung A entsprechenden, Drehstellung des Formschlusskörpers 66 relativ zum Flanschkörper 36 miteinander in Eingriff bringbar (Fig. 7 und 12) sind, während in allen anderen Drehstellungen ein in Eingriff bringen der ersten Formschlusselemente 72 und der zweiten Formschlusselemente 82 nicht möglich ist.

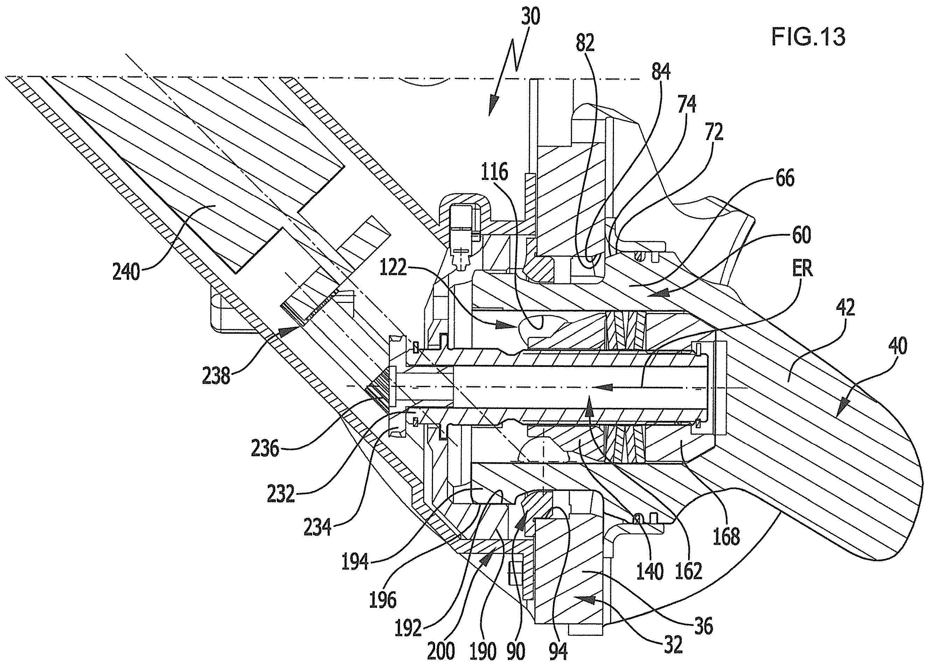

Bezogen auf die Position des Schwenklagerkörpers 60 in Richtung längs der Schwenkachse 50 wird die Stellung des Formschlusskörpers 66, in welcher die ersten Formschlusselemente 72 mit den zweiten Formschlusselementen 82 des Formschlusselemententrägers 80 des Flanschkörpers 36 in Eingriff stehen und eine Drehbewegung um die Schwenkachse 50 verhindern, als Fixierstellung bezeichnet, von welcher ausgehend sich der Formschlusskörper 66 mitsamt dem Schwenklagerkörper 60 so weit in Richtung parallel zur Schwenkachse 50 verschieben lässt, dass die ersten Formschlusselemente 72 und die zweiten Formschlusselemente 82 außer Eingriff stehen, wie dies beispielsweise in Fig. 13 dargestellt ist, und diese Stellung stellt bezogen auf die Position in Richtung längs der Schwenkachse 50 die Lösestellung dar.

In der in Fig. 13 dargestellten Lösestellung lässt sich dann der Schwenklagerkörper 60 mit dem Formschlusskörper 66 um die Schwenkachse 50 frei relativ zum Flanschkörper 36 der Lagerbasis 22 drehen.

Vorzugsweise ist die in Fig. 7 und 12 dargestellte Fixierstellung der Formschlusselemente 72, 82 so gewählt, dass sie zur Fixierung des Schwenklagerkörpers 60 in der Arbeitsstellung A dient, während sich in der Lösestellung, dargestellt in Fig. 13 der Schwenklagerkörper 60 in beliebige Stellungen um die Schwenkachse 50 verschwenken lässt, vorzugsweise von der Arbeitsstellung A in die Ruhestellung R und umgekehrt.

Sobald der Schwenklagerkörper 60 wieder die Arbeitsstellung A erreicht hat, ist durch verschieben des Schwenklagerkörpers 60 mit dem Formschlusskörper 66 in Richtung des Flanschkörpers 36 ein in Eingriff bringen der Formschlusselemente 72, 82 möglich, wobei aufgrund des in Richtung einer Einrückrichtung ER von der Lösestellung in die Fixierstellung sich konisch verjüngenden Verlaufs der Flächen 74, 84 der Formschlusselemente 72, 62 ein Zentrieren des Formschlusskörpers 66 relativ zu dem Flanschkörper 36 und außerdem eine spielfreie drehfeste Fixierung des Formschlusskörpers 66 in dem Flanschkörper 36 möglich ist, sofern eine Beaufschlagung des Formschlusskörpers 66 in der Einrückrichtung ER relativ zum Flanschkörper 36 erfolgt.

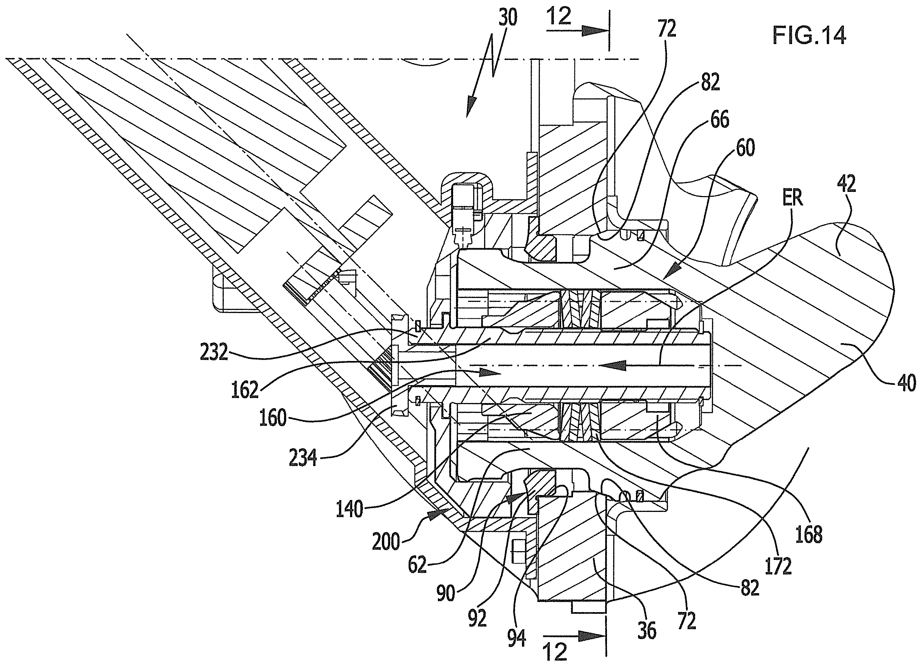

Um eine derartige Beaufschlagung des Formschlusskörpers 66 zu erreichen, ist an dem Flanschkörper 36 auf einer den Formschlusselementen 82 gegenüberliegenden Seite, wie in Fig. 14, 15 und 16 dargestellt, eine Abstützeinheit 90 vorgesehen, welche, wie in Fig. 6 dargestellt, mehrere Abstützsegmente 92 umfasst, die in Umfangsrichtung aneinander anschließend ausgebildet sind und, wie exemplarisch am Beispiel eines der Abstützsegmente 92 in Fig. 7, 14 und 15 dargestellt, in entsprechende Aufnahmen 94 in dem Flanschkörper 36 einsetzbar sind.

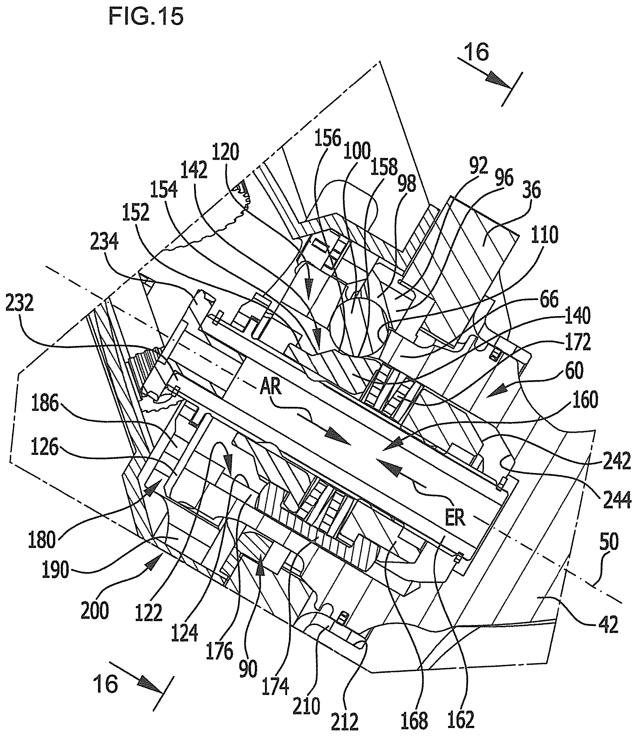

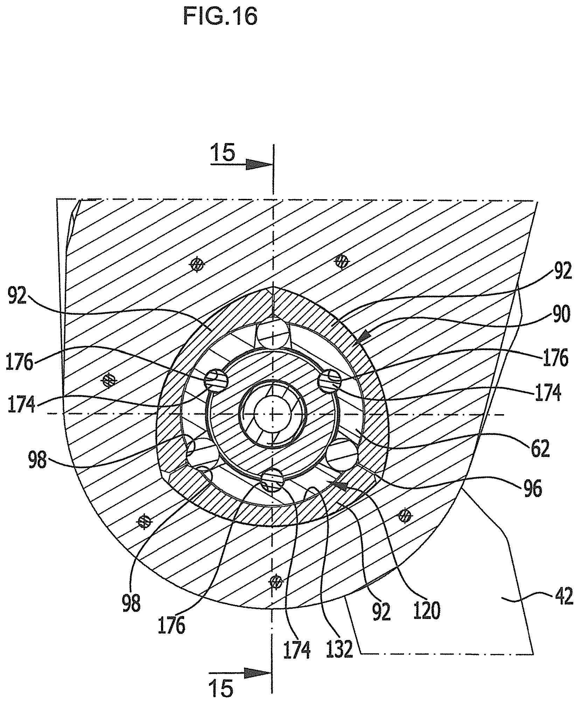

Die Abstützsegmente 92 der Abstützeinheit 90 bilden im Bereich ihrer Trennstellen 96, in denen die Abstützsegmente 92 an einander anschließen jeweils relativ zueinander V-förmig und bezogen auf die Schwenkachse 50 mit zunehmender Erstreckung in Richtung der Schwenkachse 50 und weg von den zweiten Formschlusselementen 82 radial sich erweiternd verlaufende Stützflächen 98, an denen sich Verriegelungskörper 100 abstützen, die beispielsweise als Kugeln ausgebildet sind, und in Aufnahmen 110 eines durch den Fortsatz 62 gebildeten Führungskörpers 120 aufgenommen sind (Fig. 15, 16).

Der Führungskörper 120 ist dabei als um die Schwenkachse 50 umlaufende Hülse ausgebildet, wobei die Aufnahmen 110 durch im Wesentlichen radial verlaufende Bohrungen im Führungskörper 120 gebildet sind, in denen die Verriegelungskörper 100 radial zur Schwenkachse 50 bewegbar, jedoch parallel zur Schwenkachse 50 lediglich nur mit für die radiale Bewegung erforderlichem Spiel geführt sind.

Die Verriegelungskörper 100 sind dabei bei in der Fixierstellung stehendem Schwenklagerkörper 60 in den Aufnahmen 110 radial zur Schwenkachse 50 so weit nach außen bewegbar, dass diese über eine Außenfläche 122 des Führungskörpers 120 so weit überstehen, dass sie mit dem Stützflächenpaar 98 zusammenwirken und somit in einer Axialblockierstellung den Führungskörper 120 und damit auch den Schwenklagerkörper 60 gegen eine Bewegung in Richtung parallel zur Schwenkachse 50 aus der Fixierstellung heraus relativ zum Flanschkörper 36 blockieren können.

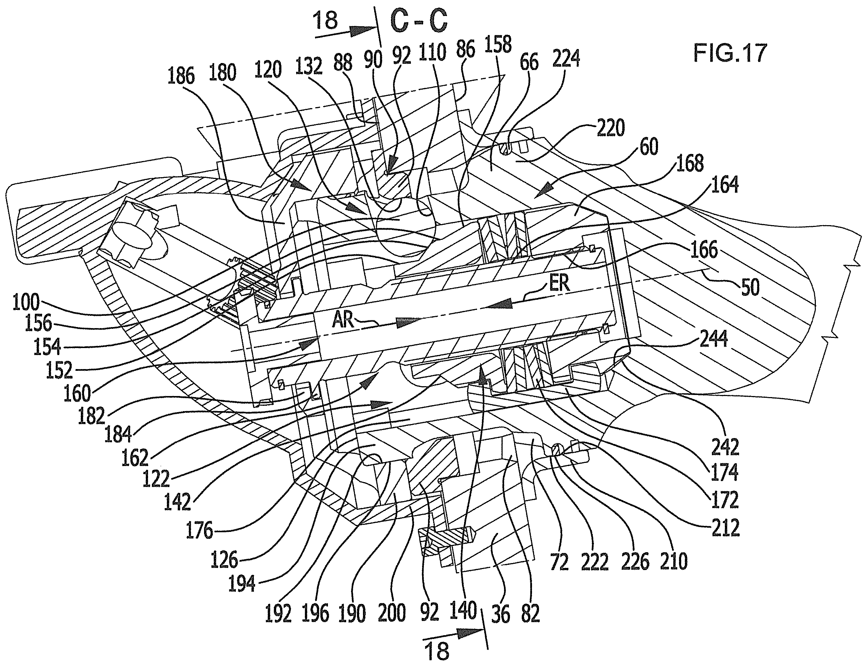

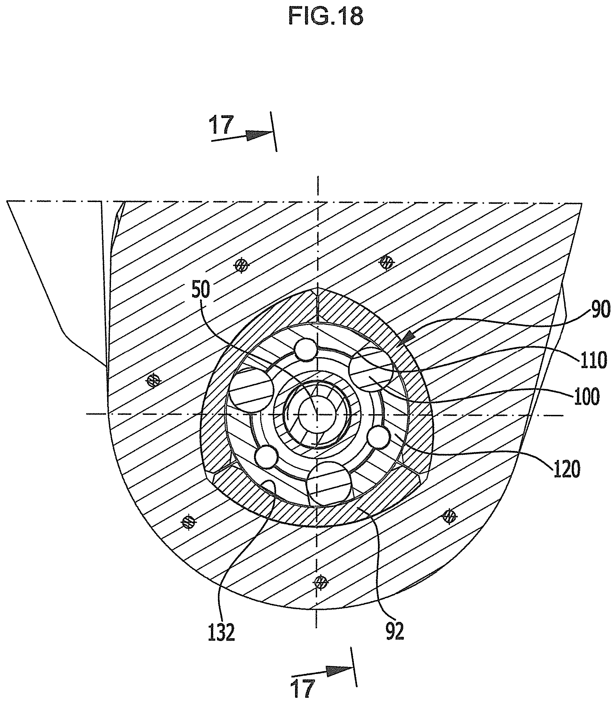

Andererseits können die Verriegelungskörper 100 von ihrer Axialblockierstellung, in welcher sie mit den Stützflächenpaaren 98 zusammenwirken, dargestellt in Fig. 15, sich radial zur Schwenkachse 50 in Richtung der Schwenkachse 50 in eine in Fig. 17 und Fig. 18 dargestellte Lösestellung bewegen, in welcher die Verriegelungskörper 100 radial so weit in Richtung auf die Schwenkachse 50 zu bewegt sind, dass der Führungskörper 120 in Richtung der Schwenkachse 50 in Richtung einer zur Einrückrichtung ER entgegengesetzten Ausrückrichtung AR bewegbar ist, so dass in einer Freigabestellung die Formschlusselemente 72 und 82 außer Eingriff sind, wobei sich hierzu die Verriegelungskörper 100 entlang einer Innenkontur 132 der Stützeinheit 90 in Richtung der Schwenkachse 50 bewegen können.

Zur Verschiebung der Verriegelungskörper 100 in radialer Richtung zur Schwenkachse 50 ist in einem von dem Führungskörper 120 umschlossenen und sich insbesondere bis in den Formschlusskörper 66 hinein ersteckenden Innenraum 122 ein als Ganzes mit 140 bezeichneter Betätigungskörper vorgesehen, welcher relativ zum Führungskörper 120 bewegbar ist, um mit einer am Betätigungskörper 140 vorgesehenen Betätigungskontur 142 die Verriegelungskörper 110 in radialer Richtung relativ zum Führungskörper 120 zu bewegen.

Insbesondere ist der Betätigungskörper 140 vorzugsweise an dem Führungskörper 120, beispielsweise an einer zur Schwenkachse 50 konzentrischen Innenfläche 124 des Führungskörpers 120 geführt.

Dabei kann der Betätigungskörper 140 beispielsweise um die Schwenkachse 50 drehbar angeordnet sein und die Betätigungskontur 142 so ausgebildet sein, dass durch eine Drehbewegung des Betätigungskörpers 150 die Verriegelungskörper 100 radial zur Schwenkachse 50 bewegbar sind.

Im dargestellten Ausführungsbeispiel ist der Betätigungskörper 140 in Richtung parallel zur Schwenkachse 50 relativ zum Führungskörper 120 bewegbar und weist eine Betätigungskontur 142 auf, die eine radial innenliegende Lösestellungsauflagefläche 152 aufweist, an welche sich eine sich über die Lösestellungsauflagefläche 152 erhebende und konisch zur Schwenkachse 50 verlaufende Verschiebefläche 154 anschließt, die in eine relativ zur Lösestellungsauflagefläche 152 radial außenliegende Blockierstellungsauflagefläche 156 übergeht, an welche sich dann auf einer der Verschiebefläche gegenüberliegenden Seite eine Blockierverspannfläche 158 anschließt, die ausgehend von der Blockierstellungsauflagefläche 156 konisch und radial zur Schwenkachse 50 zunehmend verläuft.

Vorzugsweise verlaufen die Lösestellungsauflagefläche 152 und die Blockierstellungsauflagefläche 156 ungefähr parallel zur Schwenkachse 50 und die Verschiebefläche 154 verläuft in einem größeren Konuswinkel zur Schwenkachse 50 als die Blockierverspannfläche 158.

Steht der Betätigungskörper 140 in der Lösestellung (Fig. 17 und 18), so liegen die Verriegelungskörper 100 auf der Lösestellungsauflagefläche 152 auf.

Durch eine Verschiebung des Betätigungskörpers 140 in Richtung der Schwenkachse 50 in Einrückrichtung ER kommt die Verschiebefläche 154 zur Wirkung und verschiebt die Verriegelungskörper 100 in radialer Richtung bis in ihre Axialblockierstellung, die dann erreicht ist, wenn die Verriegelungskörper 100 auf der Blockierstellungsauflagefläche 156 aufliegen und dabei dann radial so weit über den Führungskörper 120 überstehen, dass sie sich an den Stützflächenpaaren 98 der Stützeinheit 90 abstützen.

Um diese Bewegung der Verriegelungskörper 100 von der Lösestellung in die Blockierstellung ist jedoch nur dann möglich, wenn der Schwenklagerkörper 60 mit dem Formschlusskörper 66 in der Einrückrichtung ER in die Fixierstellung verschoben ist und die ersten und zweiten Formschlusselemente 72, 82 aneinander anliegen.

Um die ersten und zweiten Formschlusselemente 72, 82 kraftbeaufschlagt in Anlage zu halten und somit eine spielfreie Fixierung des Schwenklagerkörpers 60 relativ zum Flanschkörper 36 zu erreichen, ist vorzugsweise vorgesehen, dass der Betätigungskörper 140 in Richtung der Schwenkachse 50 weiterbewegt wird, so dass die Blockierverspannfläche 158 wirksam wird somit eine weitere geringfügige radiale Verschiebung der Verriegelungskörper 100 eintritt, die dazu führt, dass aufgrund der Kraftbeaufschlagung der Verriegelungskörper 100 in radialer Richtung der Führungskörper 120 eine Kraftbeaufschlagung in der Einrückrichtung ER erfährt und somit die Formschlusselemente 72, 82 kraftbeaufschlagt in Anlage gehalten werden (Fig. 15 und 16).

Vorzugsweise ist bei dem dargestellten Ausführungsbeispiel die Betätigungskontur 142 so ausgebildet, dass auf die Lösestellungsauflagefläche 152 in Ausrückrichtung AR die Verschiebefläche 154 die Blockierstellungsauflagefläche 156 und die Blockierverspannfläche 158 jeweils aufeinander folgen, so dass eine Bewegung des Betätigungskörpers 140 in Einrückrichtung ER die Lösestellungsauflagefläche 152, die Verschiebefläche 154, die Blockierstellungsauflagefläche 156 und die Blockierverspannfläche 158 aufeinanderfolgend auf den Verriegelungskörper 100 einwirken können.

Dadurch, dass die Blockierstellungsauflagefläche 156 im Wesentlichen parallel zur Schwenkachse 50 und somit zur Verschieberichtung des Betätigungskörpers 140 oder sogar parallel zur Schwenkachse 50 verläuft, ist sichergestellt, dass selbst bei größter Krafteinwirkung die Verriegelungskörper 100 nicht in der Lage sind, den Betätigungskörper 140 zu verschieben, wenn dieser auf der Blockierstellungsauflagefläche 156 aufliegt, so dass in jedem Fall sichergestellt ist, dass die Axialblockierstellung des Schwenklagerkörpers 60 und somit die Fixierstellung, in welcher die ersten Formschlusselemente 72 und die zweiten Formschlusselemente 82 in Eingriff stehen, aufrechterhalten wird, selbst auf die Gefahr hin, dass sich ein geringfügiges Spiel dadurch einstellen sollte, dass die Verriegelungskörper 110 nicht mehr von der Blockierverspannfläche 158 sondern nur noch von der Blockierstellungsauflagefläche 156 beaufschlagt sind.

Ein Antrieb des Betätigungskörpers 140 kann auf die unterschiedlichste Art und Weise erfolgen.

Beispielsweise wäre es denkbar, den Betätigungskörper 140 durch die verschiedensten Antriebsarten zu bewegen.

Im dargestellten Ausführungsbeispiel ist vorzugsweise zum Verschieben des Betätigungskörpers 140 ein Spindelantrieb 160 vorgesehen, welcher eine Antriebsspindel 162 umfasst, welche ein Außengewinde 164 aufweist, welches seinerseits in ein Innengewinde 166 einer Spindelmutter 168 eingreift, um die Spindelmutter 168 parallel zur Schwenkachse 50 zu Verschieben.

Dabei durchsetzt die Antriebsspindel 162 des Spindelantriebs 160 vorzugsweise den Betätigungskörper 140 und die Spindelmutter 168, welche auf einer Seite des Betätigungskörpers 140 angeordnet ist.

Vorzugsweise ist die Spindelmutter 168 auf einer der Betätigungskontur 142 gegenüberliegenden Seite des Betätigungskörpers 140 angeordnet und wirkt über ein Federpaket 172, insbesondere ein Tellerfederpaket, auf den Betätigungskörper 140, wenn sie diesen von der Lösestellung in die Axialblockierstellung verschiebt.

Ferner sind der Betätigungskörper 140 und die Spindelmutter 168 noch durch äußere Kopplungskörper 174 miteinander gekoppelt, wobei die äußeren Kopplungskörper 174 eine entspannte oder auch vorgespannte Ausgangsstellung des Federpakets 172 definieren, jedoch ausgehend von der Ausgangsstellung eine weitere Kompression des Federpakets 172 zulassen.

Die Kopplungskörper 174 erlauben es somit den Betätigungskörper 140 mittels der Spindelmutter 168 von der Axialblockierstellung in die Lösestellung zu bewegen und andererseits erfolgt durch das Federpaket 172 zunächst in der Ausgangsstellung eine Verschiebung des Betätigungskörpers 140 von der Lösestellung in Richtung der Axialblockierstellung, wobei das Federpaket 172 vorzugsweise so dimensioniert ist, dass eine Komprimierung desselben von der Ausgangsstellung in eine weiter komprimierte Stellung dann erfolgt, wenn die Blockierverspannfläche 158 auf die Verriegelungskörper 100 wirkt, um diese auch bei nicht weiterbewegter Spindelmutter 168 zusätzlich mit einer durch das komprimierte Federpaket 172 erzeugten Kraft zu beaufschlagen.

Dies hat den Vorteil, dass durch das Federpaket 172 die Möglichkeit besteht, in der Axialblockierstellung der Spindelmutter 168 auch bei stillstehendem Spindelantrieb 160 stets mit einer Kraft auf den Betätigungskörper 140 weiter einzuwirken, so dass die Blockierverspannfläche 158 stets kraftbeaufschlagt auf die Verriegelungskörper 100 einwirkt und diese radial mit einer Kraft beaufschlagt.

Der Kopplungskörper 174 ist, wie in Fig. 15 und 18 dargestellt, in einer Führungsnut 176 des Führungskörpers 120 geführt, so dass auch insgesamt der Betätigungskörper 140 sowie die Spindelmutter 168 drehfest in dem Führungskörper 120 aufgenommen und nur lediglich in Richtung der Spindelachse 50 bewegbar geführt sind.

Dadurch wird jede rotatorische Relativbewegung zwischen dem Betätigungskörper 140 und dem Führungskörper 120 vermieden.

Im Gegensatz dazu ist die Antriebsspindel 162, die sowohl den Betätigungskörper 140 als auch die Spindelmutter 168 durchsetzt, relativ zum Betätigungskörper 140 frei drehbar und drehbar in einem Lagerkörper 180 gehalten, welcher eine Flanschaufnahme 182 aufweist, in welcher ein Lagerflansch 184 der Antriebsspindel 162 drehbar und in Richtung der Spindelachse 50 unverschiebbar geführt ist.

Dabei ist der Lagerkörper 180 so ausgebildet, dass er die Flanschaufnahme 182 tragende Arme 186 aufweist, die sich über eine Stirnseite 126 des Führungskörpers 120 radial zur Schwenkachse 50 hinweg nach außen erstrecken und zu einem ringförmigen Stützkörper 200 verlaufen, welcher in einem Außengehäuse 200 gehalten ist.

Der Stützkörper 190 umfasst ferner eine ringförmige Innenfläche 192, welche einen an dem Fortsatz 62 angeordneten Führungsbereich 194 an einer Umfangsfläche 196 koaxial zur Schwenkachse 50 drehbar führt und lagert, wobei der Führungsbereich 194 insbesondere an einer an dem Führungskörper 120 auf einer dem Formschlusskörper 66 abgewandten Seite angeordnet ist und insbesondere als Führungswulst 194 ausgebildet ist, so dass der Schwenklagerkörper 60 im Abstand von dem Flanschkörper 36 und insbesondere im Abstand von einer dem Kugelhals 40 abgewandten Außenseite 88 des Flanschkörpers 36 drehbar gelagert ist.

Der Stützkörper 190 mit der Lagerfläche 192 ist so ausgebildet, dass dieser den Führungskörper 120 im Bereich der Führungsfläche 192 sowohl in der Fixierstellung als auch in der Freigabestellung radial zur Schwenkachse 50 abstützt und koaxial zur Schwenkachse 50 drehbar führt.

Insbesondere ist zweckmäßigerweise vorgesehen, dass der Führungswulst 194 radial zur Schwenkachse 50 über die Außenfläche 122 des Führungskörpers 120 und die Innenkontur 132 der Stützeinheit 90 übersteht und somit unabhängig von den Verriegelungskörpern 100 und deren Stellung den Schwenklagerkörper 60 gegen ein Herausbewegen aus dem Durchlass 64, insbesondere durch eine Bewegung parallel zur Schwenkachse 50, und somit gegen ein Lösen von der Lagerbasis 32 sichert.

Insbesondere wird durch das Zusammenwirken des Führungsbereichs 194 mit der Stützeinheit 90 die Freigabestellung festgelegt, in welcher ein Verschwenken des Schwenklagerkörpers 60 zwischen der Arbeitsstellung A und der Ruhestellung R erfolgt.

Wie beispielsweise in Fig. 13 und 14 dargestellt, trägt die Antriebsspindel 162 an ihrem der Spindelmutter 168 gegenüberliegenden Ende 232 ein Antriebsrad 234, welches innerhalb des Außengehäuses 200 liegt und durch ein Antriebsritzel 236 einer als Ganzes mit 238 bezeichneten Getriebeeinheit antreibbar ist, deren Antrieb wiederum durch einen Antriebsmotor 240, der ebenfalls in dem Außengehäuse 200 angeordnet ist, erfolgt.

Auf der gegenüberliegenden Seite des Flanschkörpers 36 erfolgt eine Lagerung des Schwenklagerkörpers 60 durch einen an dem Flanschkörper 36 gehaltenen und von der Außenseite 86 desselben abstehenden Lagerring 210, welcher eine ringförmige Führungsfläche 212 bildet, an welcher sich der Schwenklagerkörper 60 mit einem Führungskörper 220 abstützt, welcher eine koaxial zur Schwenkachse 50 umlaufende Ringfläche 222 aufweist, wobei Führungsfläche 212 und die Ringfläche 222 so dimensioniert sind, dass sich der Führungskörper 220 sowohl in der Fixierstellung als auch in der Lösestellung an dem Lagerring 210 abstützen können und koaxial zur Schwenkachse 50 drehbar geführt sind.

Ferner ist vorzugsweise in der Ringfläche 222 des Führungskörpers 220 noch eine Nut 224 vorgesehen, in welcher eine Dichtung 226 angeordnet ist, die gleitend an der Führungsfläche 212 anliegt und eine drehbare Abdichtung zwischen dem Lagerring 210 und dem Führungskörper 220 bewirkt.

Durch den Antriebsmotor 240 und die zwischengeschaltete Getriebeeinheit 238 lässt sich somit die Antriebsspindel 162 so antreiben, dass die Spindelmutter 168 den Betätigungskörper 140 parallel zur Schwenkachse 50 in die in Fig. 15 dargestellte Axialblockierstellung bewegt, wobei der Betätigungskörper 140 durch die Spindelmutter und das Federpaket 172 derart beaufschlagt ist, dass der Betätigungskörper 140 mit der Blockierverspannfläche 158 auf den Verriegelungskörper 110 wirkt und aufgrund des zwischen der Spindelmutter 168 und dem Betätigungskörper 140 liegenden in diesem Fall gespannten Federpakets 162 auch bei Stillstehendem Spindelantrieb 160 seitens des Betätigungskörpers 140 permanent mit einer radial zur Spindelachse 50 wirkenden Kraft beaufschlagt ist und somit auch permanent kraftbeaufschlagt auf das Stützflächenpaar 98 der Stützeinheit 90 wirkt, um somit eine permanente Kraft auf den Führungskörper 120 in Einrückrichtung ER zu erzeugen und damit wiederum die ersten und zweiten Formschlusselemente 72, 82 in Einrückrichtung kraftbeaufschlagt in Anlage zu halten, so dass der Schwenklagerkörper 60 zwar in der Fixierstellung steht, jedoch in dieser Fixierstellung in Einrückrichtung ER kraftbeaufschlagt ist und somit spielfrei durch die ersten und zweiten Formschlusselemente 72, 82 fixiert werden kann.

Dabei ist es ausreichend, wenn der Antriebsmotor 240 durch Antrieb der Antriebsspindel 162 und Verschieben der Spindelmutter 168 das Federpaket 172 von der Ausgangsstellung, vorgegeben durch die Kopplungskörper 174, in eine zwischen der Spindelmutter 168 und dem Betätigungskörper 140 gespannten Zustand bringt und dann abstoppt und diese Stellung selbständig, beispielsweise durch ein selbsthemmendes Getriebe, hält, so dass die weitere Kraftbeaufschlagung des Betätigungskörpers 140 in Einrückrichtung ER durch das gespannte Federpaket erfolgt.

Dreht der Antriebsmotor 240 in die entgegengesetzte Drehrichtung, so wird zunächst die Spannung des Federpakets 172 gelöst und dann durch verschieben der Spindelmutter 168 in Ausrückrichtung AR auch der Betätigungskörper 140 aufgrund der Wirkung der 174 zwischen der Spindelmutter 168 und dem Betätigungskörper 140 in Ausrückrichtung AR bewegt, so dass der Betätigungskörper 140 derart verschoben wird, dass ausgehend von der zunächst auf den jeweiligen Verriegelungskörper 110 wirkenden Blockierverspannfläche 158 nachfolgend die Blockierstellungsauflagefläche 156 dann die Verschiebefläche 154 und zum Schluss lediglich noch die Lösestellungsauflagefläche 152 auf die die jeweiligen Verriegelungskörper 110 wirken, so dass diese die Möglichkeit haben, in die Lösestellung überzugehen und somit eine Bewegung des Führungskörpers 120 von der Fixierstellung in die Freigabestellung zuzulassen, in welcher die ersten und zweiten Formschlusselemente 72, 82 außer Eingriff sind und somit der Schwenklagerkörper 60 um die Schwenkachse 50 relativ zur Lagerbasis 32 drehbar ist.

Diese Bewegung von der Fixierstellung in die Freigabestellung wird beispielsweise dadurch erzielt, dass die Spindelmutter 168 mit einer dem Federpaket 172 gegenüberliegenden Stirnseite 242 auf eine Anschlagfläche 244 im Innenraum 122 des Schwenklagerkörpers 60 wirkt und diesen von der Fixierstellung in die Freigabestellung verschiebt.

In der Freigabestellung wird jedoch auch eine weitere Verschiebung der Spindelmutter 168 relativ zur Antriebsspindel 162 blockiert, was dazu führt, dass durch die axial unverschiebbare aber weiterdrehende Antriebsspindel 162 und die drehfest im Schwenklagerkörper 60 angeordnete Spindelmutter 168 eine Schwenkbewegung des Schwenklagerkörpers 60 von der Arbeitsstellung A in die Ruhestellung R eingeleitet wird, so dass der Kugelhals 40 um die Schwenkachse 50 in die Ruhestellung R verschwenkt wird.

Zum Verschwenken von der Ruhestellung R in die Arbeitsstellung A dreht der Antriebsmotor 240 in der entgegengesetzten Richtung und treibt zunächst die Spindelmutter 168 so an, dass deren Stirnseite 242 von der Anschlagfläche 244 des Schwenklagerkörpers wegbewegt wird. Dies ist jedoch nur begrenzt möglich, da der Betätigungskörper 140 in Einrückrichtung ER nicht weiter bewegbar ist, da die Formschlusskörper 72, 82, die nur in der Arbeitsstellung A alle in Eingriff kommen können, eine Bewegung des Schwenklagerkörpers 60 von der Freigabestellung in der Einrückrichtung, das heißt in Richtung der Fixierstellung, blockieren und da gegebenenfalls auch die Verriegelungskörper 100, die an der Fläche 132 der Stützeinheit 90 anliegen, die Bewegung in der Einrückrichtung ER blockieren würden, so dass noch keine Bewegung des Schwenklagerkörpers 60 von der Freigabestellung in die Fixierstellung möglich ist.

Aus diesem Grund erfolgt durch die Antriebsspindel 162 und die drehfest im Schwenklagerkörper 60 angeordnete Spindelmutter 168 ausgehend von der Ruhestellung R eine Drehmitnahme des Schwenklagerkörpers 60 durch den Spindelantrieb 60 so weit, bis wieder die Arbeitsstellung A erreicht ist und erst in der Arbeitsstellung A besteht die Möglichkeit, dass sich der Schwenklagerkörper 60 durch in Eingriff bringen der Formschlusselemente 72, 82 von der Freigabestellung in die Fixierstellung unter Verschieben des Betätigungskörpers 140 bewegen kann und bei Erreichen der Fixierstellung die radiale Bewegung der Verriegelungskörper 100 von der Lösestellung in die Axialblockierstellung erfolgen kann.

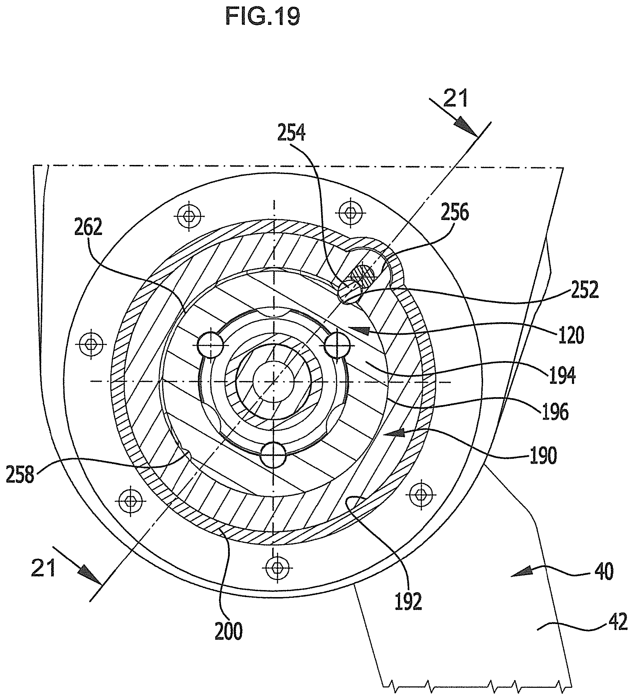

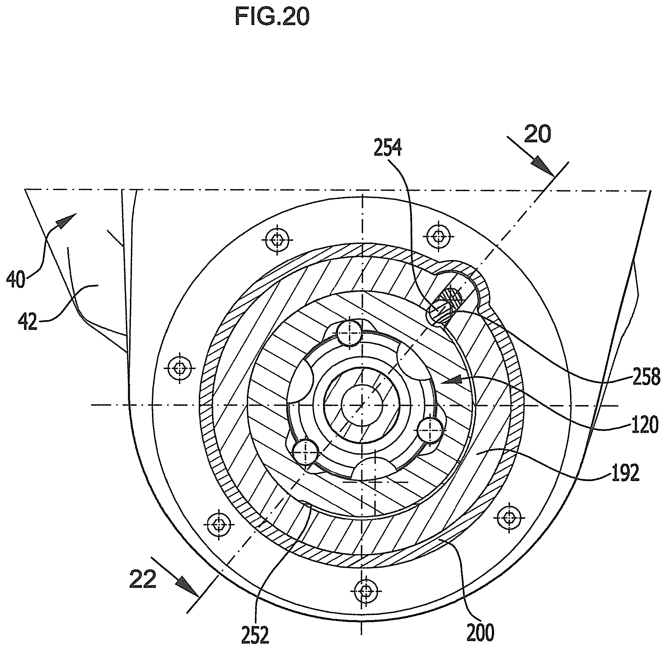

Zur zusätzlichen Fixierung des Schwenklagerkörpers 60 sowohl in der Arbeitsstellung A als auch zu alleinigen Fixierung in der Ruhestellung R ist, wie in den Fig. 19 und 20 dargestellt, eine Fixiereinheit 250 vorgesehen, welche in dem die Innenfläche 192 aufweisenden endseitigen Führungsabschnitt 194 des Führungskörpers 120 eine die Arbeitsstellung A definierende Rastvertiefung 252 aufweist, mit welcher ein Rastkörper 254 in Eingriff bringbar ist, wobei der Rastkörper 254 der Fixiereinheit 250 in einem Führungskanal 256 des Stützkörpers 190 geführt ist und somit in der Lage ist, die Drehstellung des Führungskörpers 120 relativ zum drehfest im Außengehäuse 200 angeordneten Stützkörper 190 festzulegen.

Darüber hinaus ist in dem Führungsabschnitt 194 noch eine weitere Rastvertiefung 258 der Fixiereinheit 250 vorgesehen, welche, wie in Fig. 20 dargestellt, dazu geeignet ist, im Zusammenwirken mit dem Rastkörper 254 die Drehstellung des Führungskörpers 120 und somit auch des Schwenklagerkörpers 60 relativ zu dem drehfest in dem Außengehäuse 200 angeordneten Stützkörper 192 in der Ruhestellung R festzulegen.

Dabei sind die beiden Rastvertiefungen 252 und 258 noch durch eine sich zwischen den Rastvertiefungen 252 und 258 erstreckende Eintiefung 262 verbunden, längs welcher sich der Rastkörper 254 beim Verschwenken von der Arbeitsstellung A in die Ruhestellung R oder von der Ruhestellung R in die Arbeitsstellung A bewegt, bevor er jeweils in die eine größere Tiefe als die Eintiefung 262 aufweisenden Rastvertiefungen 252 und 258 eingreift.

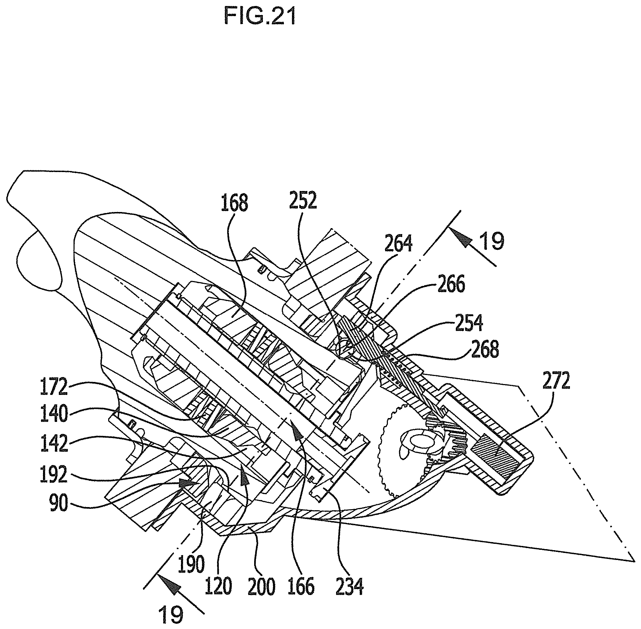

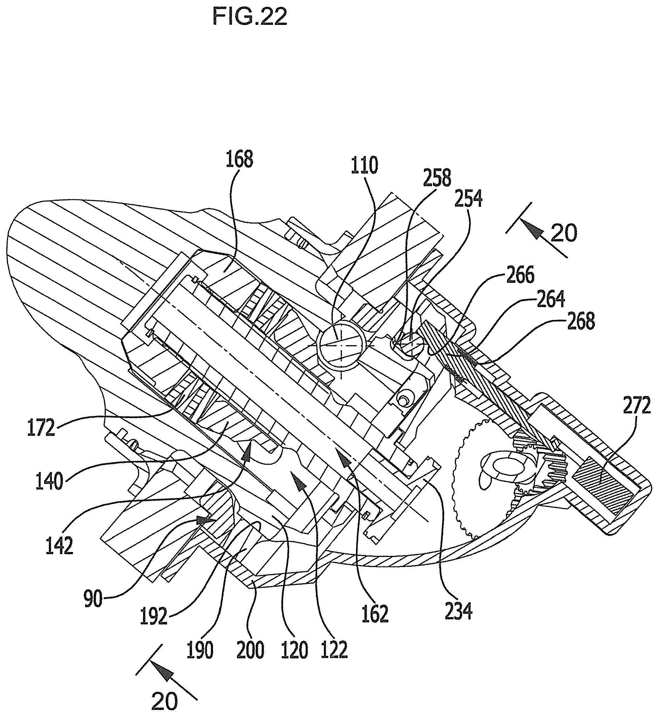

Zur Beaufschlagung des Rastkörpers 254 ist, wie in den Fig. 21 und 22 dargestellt, ein Keilkörper 264 vorgesehen, welcher mit einer Keilfläche 266 auf den Rastkörper 254 einwirkt, um diesen in Richtung der jeweiligen Rastvertiefung 252, 258 zu beaufschlagen, wobei der Keilkörper 264 seinerseits durch eine Druckfeder 268 in Richtung seiner den Rastkörper 254 in die Rastvertiefungen 252, 258 hineinbewegenden Stellung beaufschlagt ist, so dass bei Erreichen der Arbeitsstellung A oder der Ruhestellung R jeweils ein selbsttätiges Verrasten des Rastkörpers 254 mit der Rastvertiefung 252 für die Arbeitsstellung A beziehungsweise der Rastvertiefung 258 für die Ruhestellung R erfolgt.

Um jeweils die Arbeitsstellung A beziehungsweise die Ruhestellung R verlassen zu können, ist der Rastkörper 254 mit einem Löseantrieb 262 gekoppelt, welcher in der Lage ist, den Rastkörper 254 entgegen der Krafteinwirkung der Druckfeder 268 zu bewegen und somit in eine Stellung zu verbringen, in welcher dieser ein Herausbewegen des Rastkörpers 254 aus der Rastvertiefung 252 oder der Rastvertiefung 258 zulässt, um die jeweilige Schwenkbewegung zwischen der Arbeitsstellung A und der Ruhestellung R oder umgekehrt durchführen zu können.

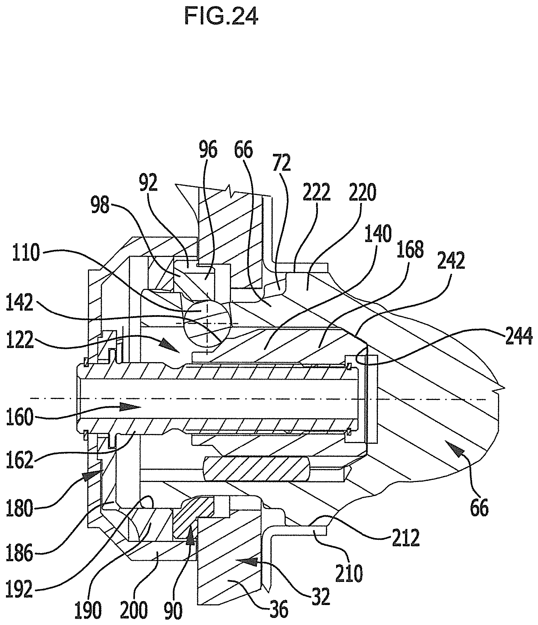

Bei einem zweiten Ausführungsbeispiel einer erfindungsgemäßen Anhängekupplung, dargestellt in Fig. 25 und 24, sind diejenigen Elemente, die mit denen des ersten Ausführungsbeispiels identisch sind, mit denselben Bezugszeichen versehen, so dass auf die Ausführungen zum ersten Ausführungsbeispiel vollinhaltlich Bezug genommen werden kann.

Im Gegensatz zum ersten Ausführungsbeispiel sind die Spindelmutter 168 und der Betätigungskörper 140 zu einem zusammenhängenden Teil vereinigt, so dass das Federpaket 172 entfallen ist.

Mit Ausnahme der durch den Entfall des Federpakets 172 ebenfalls entfallenen mit dem Federpaket 172 verbundenen Funktionen funktioniert das zweite Ausführungsbeispiel in derselben Weise wie das erste Ausführungsbeispiel.

## Patentansprüche

1. Anhängekupplung umfassend eine Schwenklagereinheit (30) mit einem an in einer fahrzeugfesten Lagerbasis (32) um eine Schwenkachse (50) zwischen einer Arbeitsstellung (A) und einer Ruhestellung (R) verschwenkbar gelagerten Schwenklagerkörper (60), an welchem ein an einem zweiten Ende (44) eine Kupplungskugel (46) tragender Kugelhals (40) mit einem ersten Ende (42) gehalten ist, wobei an dem Schwenklagerkörper (60) koaxial zur Schwenkachse (50) ein Fortsatz (62) angeordnet ist, welcher einen Durchlass (64) der Lagerbasis (32) durchgreift, wobei der Schwenklagerkörper (60) einen Formschlusskörper (66) mit radial außerhalb des Fortsatzes (62) angeordneten ersten Formschlusselementen (72) umfasst, die in der Arbeitsstellung (A) durch Verchieben des Schwenklagerkörpers (60) parallel zur Schwenkachse (50) zwischen einer Fixierstellung, in welcher die ersten Formschlusselemente (72) mit an der Lagereinheit radial außerhalb des Fortsatzes (62) angeordneten zweiten Formschlusselementen (82) in Eingriff stehen, und einer Freigabestellung, in welcher die ersten Formschlusselemente (72) und die zweiten Formschlusselemente (82) außer Eingriff stehen, hin- und herbewegbar sind, wobei der Schwenklagerkörper (60) einen mit diesem zumindest in Richtung parallel zur Schwenkachse (50) fest verbundenen Führungskörper (120) mit Aufnahmen (110) aufweist, in welchen Verriegelungskörper (100) mit mindestens einer radial zur Schwenkachse (50) verlaufenden Komponente bewegbar angeordnet sind, wobei die Verriegelungskörper (100) in den Aufnahmen (110) von einer radial innenliegenden Lösestellung in eine radial über den Führungskörper (120) überstehende Axialblockierstellung bewegbar sind und in der Axialblockierstellung an von der Lagerbasis (32) getragenen Stützflächen (98) anliegen, die so an der Lagerbasis (32) angeordnet und ausgerichtet sind, dass die in der Axialblockierstellung stehenden Verriegelungskörper (100) beim Anliegen an den Stützflächen (98) die ersten und zweiten Formschlusselemente (72, 82) in der Fixierstellung halten, **dadurch gekennzeichnet, dass** die ersten Formschlusselemente (72) der Schwenkachse (50) abgewandt angeordnete erste Formschlussflächen (74) aufweisen, die Gesamtheit der ersten Formschlussflächen (74) so am Formschlusskörper (66) angeordnet und ausgebildet ist, dass sie mit den zweiten Formschlusselementen (82) lediglich in der Arbeitsstellung (A) in Eingriff kommen können.

2. Anhängekupplung nach Anspruch 1, **dadurch gekennzeichnet, dass** die ersten Formschlusselemente (72) an einer Außenkontur des Formschlusskörpers (66) angeordnet sind.

3. Anhängekupplung nach einem der voranstehenden Ansprüche, **dadurch gekennzeichnet, dass** jede der ersten Formschlussflächen (74) in einer Umlaufrichtung um die Schwenkachse (50) einen radial variierenden Konturverlauf aufweist, und/oder dass insbesondere die ersten Formschlusselemente (72) in unterschiedlichen um die Schwenkachse (50) herum angeordneten Bogensegmenten die ersten Formschlussflächen (74) bilden, und/oder dass insbesondere jede der ersten Formschlussflächen (74) in Richtung parallel zur Schwenkachse (50) einen radial variierenden Konturverlauf aufweist, dass insbesondere die ersten Formschlussflächen (74) in diese schneidenden und durch die Schwenkachse (50) hindurch verlaufenden geometrischen Ebenen zumindest abschnittsweise in einem stumpfen Winkel zur Schwenkachse (50) verlaufen.

4. Anhängekupplung nach einem der voranstehenden Ansprüche, **dadurch gekennzeichnet, dass** die zweiten Formschlusselemente (82) an einer Innenkontur (68) eines Formschlusselemententrägers (80) angeordnet sind und/oder dass insbesondere die zweiten Formschlusselemente (82) den ersten Formschlusselementen (72) zugewandte zweite Formschlussflächen (84) aufweisen, dass insbesondere die zweiten Formschlussflächen (84) der Schwenkachse (50) zugewandt angeordnet sind, dass insbesondere die zweiten Formschlussflächen (84) in einer Umlaufrichtung um die Schwenkachse (50) einen radial variierenden Konturverlauf aufweisen, dass insbesondere die zweiten Formschlusselemente (82) in unterschiedlichen um die Schwenkachse (50) herum angeordneten Bogensegmenten zweite Formschlussflächen (84) bilden, dass insbesondere die zweiten Formschlussflächen (84) einen den ersten Formschlussflächen (74) in Richtung parallel zur Schwenkachse (50) entsprechenden radial variierenden Konturverlauf aufweisen, dass insbesondere die zweiten Formschlussflächen (84) in diese schneidenden und durch die Schwenkachse (50) hindurch verlaufenden geometrischen Ebenen zumindest abschnittsweise mit der Schwenkachse (50) einen spitzen Winkel einschließen.

5. Anhängekupplung nach einem der voranstehenden Ansprüche, **dadurch gekennzeichnet, dass** der Formschlusskörper (66) um den Fortsatz (62) umlaufend ausgebildet ist, dass insbesondere der Formschlusskörper (66) an einem sich radial über den Fortsatz (62) hinaus erstreckenden Bereich des Schwenklagerkörpers (60) angeordnet ist, dass insbesondere der Formschlusskörper (66) mit dem an der Lagerbasis (32) vorgesehenen Formschlusselemententräger (80) zusammenwirkt, wobei der Formschlusselemententräger (80) auf einer dem Formschlusskörper (66) zugewandten Seite der Lagerbasis (32), insbesondere an eine Außenseite (86) der Lagerbasis (32) angrenzend, in der Lagerbasis (32) ausgebildet ist.

6. Anhängekupplung nach einem der voranstehenden Ansprüche, **dadurch gekennzeichnet, dass** der Führungskörper (120) drehfest mit dem Schwenklagerkörper (60) verbunden ist, dass insbesondere der Führungskörper (120) hülsenförmig ausgebildet ist.

7. Anhängekupplung nach einem der voranstehenden Ansprüche, **dadurch gekennzeichnet, dass** der Schwenklagerkörper (60) mittels des Fortsatzes (62) an der Lagerbasis (32) um die Schwenkachse (50) schwenkbar gelagert ist, dass insbesondere der Fortsatz (62) auf einer dem Formschlusskörper (66) des Schwenklagerkörpers (60) abgewandten Seite einen Führungsbereich (194) aufweist, mit welchem dieser relativ zur Lagerbasis (32) um die Schwenkachse (50) schwenkbar gelagert ist.

8. Anhängekupplung nach einem der voranstehenden Ansprüche, **dadurch gekennzeichnet, dass** der Schwenklagerkörper (60) einen Führungskörper (220) aufweist, mit welcher dieser relativ zur Lagerbasis (32) um die Schwenkachse (50) verschwenkbar gelagert ist, dass insbesondere der Führungskörper (220) an einem an der Lagerbasis (32) gehaltenen Lagerring (210) gelagert ist.

9. Anhängekupplung nach einem der voranstehenden Ansprüche, **dadurch gekennzeichnet, dass** die Stützflächen (98) an einer an der Lagerbasis (32) angeordneten Stützeinheit (90) angeordnet sind, dass insbesondere die Stützeinheit (90) auf einer dem Formschlusselemententräger (80) gegenüberliegenden Seite der Lagerbasis (32) angeordnet ist, und/oder dass insbesondere die Stützeinheit (90) aus mindestens zwei Abstützsegmenten (92) gebildet ist, dass insbesondere die Abstützsegmente (92) durch Trennstellen (96) getrennt sind und dass diese insbesondere an die Trennstellen (96) angrenzende Stützflächen (98) aufweisen, dass insbesondere die Verriegelungskörper (100) auf die Stützeinheit (90) im Bereich einer Trennstelle (96) zwischen zwei Abstützsegmenten (92) wirken und sich an beiderseits der Trennstelle (96) angeordneten Stützflächen (98) der Abstützsegmente (92) abstützen, dass insbesondere die Stützeinheit (90) mit einem an dem Fortsatz (62) auf einer dem Formschlusskörper (66) abgewandten Seite angeordneten Führungsbereich (194) den Fortsatz (62) des Schwenklagerkörpers (60) gegen ein Herausbewegen aus dem Durchlass (64) sichert.

10. Anhängekupplung nach einem der voranstehenden Ansprüche, **dadurch gekennzeichnet, dass** in dem Führungskörper (120) ein Betätigungskörper (140) für die Verriegelungskörper (100) angeordnet ist, dass insbesondere der Betätigungskörper (140) relativ zu dem Führungskörper (120) bewegbar ist und eine Betätigungskontur (142) aufweist, um die Verriegelungskörper (100) von der Lösestellung in die Axialblockierstellung und umgekehrt zu bewegen, dass insbesondere die Betätigungskontur (142) des Betätigungskörpers (140) Betätigungsflächen (152, 154, 156, 158) aufweist, deren Abstand von der Schwenkachse (50) variiert, so dass die Verriegelungskörper (100) beim Anliegen an einer radial innen liegenden Betätigungsfläche (152) in der Lösestellung und beim Anliegen an einer radial außen liegenden Betätigungsfläche (156, 158) in der Axialblockierstellung stehen, dass insbesondere der Betätigungskörper (140) eine mit zunehmender Erstreckung in Richtung parallel zur Schwenkachse (50) in einem zunehmenden radialen Abstand von der Schwenkachse (50) verlaufende Betätigungsfläche (158) aufweist, an der die Verriegelungskörper (100) in der Axialblockierstellung anliegen, dass insbesondere der Betätigungskörper (140) an dem Führungskörper (120) bewegbar geführt ist, dass insbesondere der Betätigungskörper (140) in Richtung parallel zur Schwenkachse (50) relativ zu den Verriegelungskörpern (100) bewegbar ist, dass insbesondere durch die Bewegung des Betätigungskörpers (140) die Verriegelungskörper (100) von der Lösestellung in die Axialblockierstellung und umgekehrt bewegbar sind.

11. Anhängekupplung nach einem der voranstehenden Ansprüche, **dadurch gekennzeichnet, dass** der Betätigungskörper (140) durch einen Verschiebeantrieb (160) in Richtung parallel zur Schwenkachse (50) verschiebbar ist, dass insbesondere der Verschiebeantrieb ein Spindelantrieb (160) ist, dass insbesondere der Spindelantrieb (160) eine Antriebsspindel (162) und eine parallel zur Schwenkachse (50) bewegbare Spindelmutter (168) zur Bewegung des Betätigungskörpers (140) aufweist, dass insbesondere die Antriebsspindel (162) einen Durchlass des Betätigungskörpers (140) durchsetzt, dass insbesondere die Spindelmutter (168) starr mit dem Betätigungskörper (140) gekoppelt ist, dass insbesondere die Spindelmutter (168) über ein federelastisches Element (172) auf den Betätigungskörper (140) wirkt, dass insbesondere beim Verfahren der Spindelmutter (168) von der Lösestellung in die Axialblockierstellung der Betätigungskörper (140) ebenfalls von der Lösestellung in die Axialblockierstellung verfahren wird.

12. Anhängekupplung nach einem der voranstehenden Ansprüche, **dadurch gekennzeichnet, dass** beim Verfahren der Spindelmutter (168) von der Axialblockierstellung in die Lösestellung der Betätigungskörper (140) durch mindestens einen zwischen der Spindelmutter (168) und dem Betätigungskörper (140) wirksamen Kopplungskörper (174) von der Axialblockierstellung in die Lösestellung verfahren wird, dass insbesondere der Betätigungskörper (140) und/oder die Spindelmutter (168) im Anschluss an ein Verfahren von der Axialblockierstellung in Richtung der Lösestellung auf den Schwenklagerkörper (60) wirkt, um diesen von der Fixierstellung in die um die Schwenkachse (50) drehbare Freigabestellung bewegen, dass insbesondere der Betätigungskörper (140) und/oder die Spindelmutter (168) im Anschluss an ein Verfahren von der Axialblockierstellung in Richtung der Lösestellung auf den Schwenklagerkörper (60) wirkt, um diesen von der Fixierstellung in die um die Schwenkachse (50) drehbare Freigabestellung bewegen, dass insbesondere der Betätigungskörper (140) und/oder die Spindelmutter (168) im Anschluss an ein Verfahren von der Freigabestellung in Richtung der Fixierstellung auf den Schwenklagerkörper (60) wirkt, um diesen von der Lösestellung in die Axialblockierstellung zu bewegen.

13. Anhängekupplung nach einem der voranstehenden Ansprüche, **dadurch gekennzeichnet, dass** mit dem Spindelantrieb (160) in der Freigabestellung ein Verschwenken des Schwenklagerkörpers (60) von der Arbeitsstellung (A) in die Ruhestellung (R) erfolgt, dass insbesondere mit dem Spindelantrieb (160) in der Freigabestellung ein Verschwenken des Schwenklagerkörpers (60) von der Ruhestellung (R) in die Arbeitsstellung (A) erfolgt, dass insbesondere das Verschwenken des Schwenklagerkörpers (60) mittels des Spindelantriebs (160) aufgrund einer Blockierung einer Verschiebung der Spindelmutter (168) erfolgt, dass insbesondere die Blockierung der Verschiebung der Spindelmutter (168) in der Freigabestellung des Schwenklagerkörpers (60) erfolgt, dass insbesondere bei einer Bewegung in einer zur Freigabestellung hin führenden Ausrückrichtung (AR) eine Blockierstellung einer weiteren Verschiebung eine Schwenkbewegung von der Arbeitsstellung (A) in die Ruhestellung (R) bewirkt, dass insbesondere bei einer Bewegung in einer von der Freigabestellung weg führenden Einrückrichtung (ER) eine Blockierung einer weiteren Verschiebung eine Schwenkbewegung von der Ruhestellung (R) in die Arbeitsstellung (A) bewirkt.

14. Anhängekupplung einem der voranstehenden Ansprüche, **dadurch gekennzeichnet, dass** der Schwenklagerkörper (60) durch eine Fixiereinheit (250) relativ zur Lagerbasis (32) fixierbar ist, dass insbesondere die Fixiereinheit (250) den Schwenklagerkörper (60) in der um die Schwenkachse (50) schwenkbaren Freigabestellung relativ zur Lagerbasis (32) in der Ruhestellung fixierend ausbildet, dass insbesondere die Fixiereinheit (250) den Schwenklagerkörper (60) in der um die Schwenkachse (50) schwenkbaren Freigabestellung relativ zur Lagerbasis (32) in der Arbeitsstellung fixierend ausgebildet ist.

## Claims

1. A trailer coupling, comprising a pivot bearing unit (30) having a pivot bearing body (60) which is mounted on a bearing base (32) that is fixed to the vehicle such that it is pivotal about a pivot axis (50) between a working position (A) and a rest position (R), wherein a ball neck (40) is held at a first end (42) on the pivot bearing body (60) and carries a coupling ball (46) at a second end (44), wherein arranged on the pivot bearing body (60), coaxially in relation to the pivot axis (50), is a prolonged portion (62) that passes through an aperture (64) in the bearing base (32), wherein the pivot bearing body (60) comprises a positively-locking body (66) having first positively-locking elements (72) that are arranged radially outside the prolonged portion (62) and, in the working position (A), are movable to and fro, by displacing the pivot bearing body (60) parallel to the pivot axis (50), between a fixed position in which the first positively-locking elements (72) are in engagement with second positively-locking elements (82) that are arranged on the bearing unit radially outside the prolonged portion (62), and a cleared position in which the first positively-locking elements (72) and the second positively-locking elements (82) are disengaged, wherein the pivot bearing body (60) has a guide body (120) that is fixedly connected thereto, at least in the direction parallel to the pivot axis (50), and has receptacles (110) in which locking bodies (100) are movably arranged in a manner having at least one component that runs radially in relation to the pivot axis (50), wherein the locking bodies (100) are movable in the receptacles (110) from a radially inwardly located release position into an axial blocking position that projects radially beyond the guide body (120) and, in the axial blocking position, abut against support faces (98) formed on the bearing base (32), which are arranged and oriented on the bearing base (32) such that in the axial blocking position, when they abut against the support faces (98), the locking bodies (100) keep the first and second positively-locking elements (72, 82) in the fixed position, **characterised in that** the first positively-locking elements (72) have first positively-locking faces (74) that are arranged facing away from the pivot axis (50), and all of the first positively-locking faces (74) are arranged and configured on the positively-locking body (66) such that they can come into engagement with the second positively-locking elements (82) only in the working position (A).

2. A trailer coupling according to Claim 1, **characterised in that** the first positively-locking elements (72) are arranged on an external contour of the positively-locking body (66).

3. A trailer coupling according to one of the preceding claims, **characterised in that** each of the first positively-locking faces (74) has, in a peripheral direction relative to the pivot axis (50), a contour course that varies radially, and/or **in that** in particular the first positively-locking elements (72) form the first positively-locking faces (74) in different arc segments that are arranged around the pivot axis (50), and/or **in that** in particular each of the first positively-locking faces (74) has a contour course that varies radially in the direction parallel to the pivot axis (50), **in that** in particular the first positively-locking faces (74) run in geometric planes that intersect this and run through the pivot axis (50), at least in certain regions at an obtuse angle to the pivot axis (50).

4. A trailer coupling according to one of the preceding claims, **characterised in that** the second positively-locking elements (82) are arranged on an internal contour (68) of a positively-locking element carrier (80), and/or **in that** in particular the second positively-locking elements (82) have second positively-locking faces (84) which face the first positively-locking elements (72), **in that** in particular the second positively-locking faces (84) are arranged facing the pivot axis (50), **in that** in particular the second positively-locking faces (84) have, in a peripheral direction relative to the pivot axis (50), a contour course that varies radially, **in that** in particular the second positively-locking elements (82) form second positively-locking faces (84) in different arc segments that are arranged around the pivot axis (50), **in that** in particular the second positively-locking faces (84) have a contour course that varies radially in a manner corresponding to the first positively-locking faces (74) in the direction parallel to the pivot axis (50), **in that** in particular the second positively-locking faces (84) form an acute angle with the pivot axis (50), at least in certain regions, in geometric planes that intersect this and run through the pivot axis (50).

5. A trailer coupling according to one of the preceding claims, **characterised in that** the positively-locking body (66) is configured to surround the prolonged portion (62), **in that** in particular the positively-locking body (66) is arranged on a region of the pivot bearing body (60) that extends radially beyond the prolonged portion (62), **in that** in particular the positively-locking body (66) cooperates with the positively-locking element carrier (80) that is provided on the bearing base (32), wherein the positively-locking element carrier (80) is formed in the bearing base (32) on a side of the bearing base (32) that faces the positively-locking body (66), in particular adjoining an outer side (86) of the bearing base (32).

6. A trailer coupling according to one of the preceding claims, **characterised in that** the guide body (120) is connected to the pivot bearing body (60) such that it rotates therewith, **in that** in particular the guide body (120) takes the form of a sleeve.

7. A trailer coupling according to one of the preceding claims, **characterised in that** the pivot bearing body (60) is mounted on the bearing base (32) such that it is pivotal about the pivot axis (50) by way of the prolonged portion (62), **in that** in particular the prolonged portion (62) has, on a side facing away from the positively-locking body (66) of the pivot bearing body (60), a guide region (194) by which it is mounted such that it is pivotal about the pivot axis (50) in relation to the bearing base (32).

8. A trailer coupling according to one of the preceding claims, **characterised in that** the pivot bearing body (60) has a guide body (220) as a result of which it is mounted such that it is pivotal about the pivot axis (50) in relation to the bearing base (32), **in that** in particular the guide body (220) is mounted on a bearing ring (210) held on the bearing base (32).

9. A trailer coupling according to one of the preceding claims, **characterised in that** the support faces (98) are arranged on a support unit (90) that is arranged on the bearing base (32), **in that** in particular the support unit (90) is arranged on an opposite side of the bearing base (32) to the positively-locking element carrier (80), and/or **in that** in particular the support unit (90) is formed from at least two support segments (92), **in that** in particular the support segments (92) are separated by separation points (96), and **in that** in particular they have support faces (98) adjoining the separation points (96), **in that** in particular the locking bodies (100) act on the support unit (90) in the region of a separation point (96) between two support segments (92) and are supported against support faces (98) of the support segments (92) that are arranged on either side of the separation point (96), **in that** in particular the support unit (90), as a result of a guide region (194) that is arranged on the prolonged portion (62) on a side facing away from the positively-locking body (66), secures the prolonged portion (62) of the pivot bearing body (60) to prevent its moving out of the aperture (64).

10. A trailer coupling according to one of the preceding claims, **characterised in that** arranged in the guide body (120) is an actuation body (140) for the locking bodies (100), **in that** in particular the actuation body (140) is movable in relation to the guide body (120) and has an actuation contour (142) in order to move the locking bodies (100) from the release position into the axial blocking position and vice versa, **in that** in particular the actuation contour (142) of the actuation body (140) has actuation faces (152, 154, 156, 158) of which the spacing from the pivot axis (50) varies, with the result that the locking bodies (100) are in the release position when they abut against a radially inwardly located actuation face (152), and are in the axial blocking position when they abut against a radially outwardly located actuation face (156, 158), **in that** in particular the actuation body (140) has an actuation face (158) which runs at an increasing radial spacing from the pivot axis (50) as the extent in the direction parallel to the pivot axis (50) increases and against which the locking bodies (100) abut in the axial blocking position, **in that** in particular the actuation body (140) is guided such that it is movable on the guide body (120), **in that** in particular the actuation body (140) is movable in relation to the locking bodies (100) in the direction parallel to the pivot axis (50), **in that** in particular as a result of movement of the actuation body (140) the locking bodies (100) are movable from the release position into the axial blocking position and vice versa.

11. A trailer coupling according to one of the preceding claims, **characterised in that** the actuation body (140) is displaceable in the direction parallel to the pivot axis (50) by a displacement drive (160), **in that** in particular the displacement drive is a spindle drive (160), **in that** in particular the spindle drive (160) has a drive spindle (162) and a spindle nut (168) which is movable parallel to the pivot axis (50), for the purpose of moving the actuation body (140), **in that** in particular the drive spindle (162) passes through an aperture in the actuation body (140), **in that** in particular the spindle nut (168) is rigidly coupled to the actuation body (140), **in that** in particular the spindle nut (168) acts on the actuation body (140) by way of a resilient element (172), **in that** in particular when the spindle nut (168) is moved from the release position into the axial blocking position the actuation body (140) is likewise moved from the release position into the axial blocking position.

12. A trailer coupling according to one of the preceding claims, **characterised in that** when the spindle nut (168) is moved from the axial blocking position into the release position the actuation body (140) is moved by at least one coupling body (174), which is active between the spindle nut (168) and the actuation body (140), from the axial blocking position into the release position, **in that** in particular the actuation body (140) and/or the spindle nut (168) act on the pivot bearing body (60) after a movement from the axial blocking position in the direction of the release position in order to move the pivot bearing body (60) from the fixed position into the cleared position, in which rotation about the pivot axis (50) is possible, **in that** in particular the actuation body (140) and/or the spindle nut (168) act on the pivot bearing body (60) after a movement from the cleared position in the direction of the fixed position in order to move the pivot bearing body (60) from the release position into the axial blocking position.

13. A trailer coupling according to one of the preceding claims, **characterised in that**, with the spindle drive (160) in the cleared position, the pivot bearing body (60) is pivoted from the working position (A) into the rest position (R), **in that** in particular with the spindle drive (160) in the cleared position the pivot bearing body (60) is pivoted from the rest position (R) into the working position (A), **in that** in particular the pivot bearing body (60) is pivoted using the spindle drive (160) because displacement of the spindle nut (168) is blocked, **in that** in particular displacement of the spindle nut (168) is blocked in the cleared position of the pivot bearing body (60), **in that** in particular when there is a movement in an outward direction (AR), towards the cleared position, a position of blocking further displacement brings about a pivotal movement from the working position (A) into the rest position (R), **in that** in particular when there is a movement in an inward direction (ER), away from the cleared position, blocking of further displacement brings about a pivotal movement from the rest position (R) into the working position (A).

14. A trailer coupling according to one of the preceding claims, **characterised in that** the pivot bearing body (60) is fixable in relation to the bearing base (32) by a fixing unit (250), **in that** in particular the fixing unit (250) fixes the pivot bearing body (60) in the cleared position pivotal about the pivot axis (50) in relation to the bearing base (32) in the rest position, **in that** in particular the fixing unit (250) fixes the pivot bearing body (60) in the cleared position pivotal about the pivot axis (50) in relation to the bearing base (32) in the working position.

## Revendications

1. Attelage de remorque comprenant une unité de palier de pivotement (30) avec un corps de palier de pivotement (60) monté de manière à pouvoir pivoter autour d'un axe de pivotement (50) entre une position de travail (A) et une position de repos (R) sur une base de palier (32) solidaire du véhicule, sur lequel est maintenu par une première extrémité (42) un col de boule (40) portant une boule d'attelage (46) sur une deuxième extrémité (44), dans lequel est disposé sur le corps de palier de pivotement (60) coaxialement à l'axe de pivotement (50) un prolongement (62), lequel traverse un passage (64) la base de palier (32), dans lequel le corps de palier de pivotement (60) comprend un corps à complémentarité de forme (66) avec des premiers éléments à complémentarité de forme (72) disposés radialement à l'extérieur du prolongement (62) qui, dans la position de travail (A), peuvent être déplacés en va-et-vient par coulissement du corps de palier de pivotement (60) parallèlement à l'axe de pivotement (50) entre une position de fixation, dans laquelle les premiers éléments à complémentarité de forme (72) sont en prise avec des deuxièmes éléments à complémentarité de forme (82) disposés radialement à l'extérieur du prolongement (62) sur l'unité de palier, et une position de libération, dans laquelle les premiers éléments à complémentarité de forme (72) et les deuxièmes éléments à complémentarité de forme (82) sont hors prise, dans lequel le corps de palier de pivotement (60) présente un corps de guidage (120), relié de manière solidaire à celui-ci au moins parallèlement à l'axe de pivotement (50), avec des logements (110), dans lesquels des corps de verrouillage (100) sont disposés de manière à pouvoir être déplacés avec au moins une composante s'étendant radialement à l'axe de pivotement (50), dans lequel les corps de verrouillage (100) peuvent être déplacés dans les logements (110) depuis une position de desserrage située radialement à l'intérieur dans une position de blocage axial dépassant radialement pardessus le corps de guidage (120) et reposent dans la position de blocage axial sur des surfaces d'appui (98) supportées par la base de palier (32), qui sont disposées et orientées de telle sorte sur la base de palier (32) que les corps de verrouillage (100) maintiennent, lorsqu'ils reposent sur les surfaces d'appui (98) les premiers et deuxièmes éléments à complémentarité de forme (72, 82) dans la position de fixation, **caractérisé en ce que** les premiers éléments à complémentarité de forme (72) présentent des premières surfaces à complémentarité de forme (74) disposées à l'opposé de l'axe de pivotement (50), la totalité des premières surfaces à complémentarité de forme (74) est disposée et réalisée sur le corps à complémentarité de forme (66) de telle sorte qu'elles ne peuvent venir en prise avec les deuxièmes éléments à complémentarité de forme (82) que dans la position de travail (A).

2. Attelage de remorque selon la revendication 1, **caractérisé en ce que** les premiers éléments à complémentarité de forme (72) sont disposés sur un contour extérieur du corps à complémentarité de forme (66).

3. Attelage de remorque selon l'une quelconque des revendications précédentes, **caractérisé en ce que** chacune des premières surfaces à complémentarité de forme (74) présente un tracé de contour variant radialement dans une direction de rotation autour de l'axe de pivotement (50), et/ou **en ce qu'**en particulier les premiers éléments à complémentarité de forme (72) forment les premières surfaces à complémentarité de forme (74) dans différents segments d'arc disposés autour de l'axe de pivotement (50), et/ou qu'en particulier chacune des premières surfaces à complémentarité de forme (74) présente, parallèlement à l'axe de pivotement (50), un tracé de contour variant radialement, qu'en particulier les premières surfaces à complémentarité de forme (74) s'étendent dans ces plans géométriques coupant celles-ci et s'étendant à travers l'axe de pivotement (50) au moins par sections à un angle obtus par rapport à l'axe de pivotement (50).

4. Attelage de remorque selon l'une quelconque des revendications précédentes, **caractérisé en ce que** les deuxièmes éléments à complémentarité de forme (82) sont disposés sur un contour intérieur (68) d'un support d'élément à complémentarité de forme (80) et/ou qu'en particulier les deuxièmes éléments à complémentarité de forme (82) présentent des deuxièmes surfaces à complémentarité de forme (84) tournées vers les premiers éléments à complémentarité de forme (72), qu'en particulier les deuxièmes surfaces à complémentarité de forme (84) sont disposées de manière tournée vers l'axe de pivotement (50), qu'en particulier les deuxièmes surfaces à complémentarité de forme (84) présentent un tracé de contour variant radialement dans une direction périphérique autour de l'axe de pivotement (50), qu'en particulier les deuxièmes éléments à complémentarité de forme (82) forment dans différents segments d'arc disposés autour de l'axe de pivotement (50) des deuxièmes surfaces à complémentarité de forme (84), qu'en particulier les deuxièmes surfaces à complémentarité de forme (84) présentent un tracé de contour variant radialement correspondant aux premières surfaces à complémentarité de forme (74) parallèlement à l'axe de pivotement (50), qu'en particulier les deuxièmes surfaces à complémentarité de forme (84) forment un angle aigu au moins par sections avec l'axe de pivotement (50) dans ces plans géométriques coupant celles-ci et s'étendant à travers l'axe de pivotement (50).

5. Attelage de remorque selon l'une quelconque des revendications précédentes, **caractérisé en ce que** le corps à complémentarité de forme (66) est réalisé en périphérie autour du prolongement (62), qu'en particulier le corps à complémentarité de forme (66) est disposé sur une zone du corps de palier de pivotement (60) s'étendant radialement au-delà du prolongement (62), qu'en particulier le corps à complémentarité de forme (66) coopère avec le support d'élément à complémentarité de forme (80) prévu sur la base de palier (32), dans lequel le support d'élément à complémentarité de forme (80) est réalisé dans la base de palier (32) sur un côté de la base de palier (32) tourné vers le corps à complémentarité de forme (66), en particulier de manière adjacente à un côté extérieur (86) de la base de palier (32).

6. Attelage de remorque selon l'une quelconque des revendications précédentes, **caractérisé en ce que** le corps de guidage (120) est relié de manière solidaire en rotation au corps de palier de pivotement (60), qu'en particulier le corps de guidage (120) est réalisé en forme de douille.

7. Attelage de remorque selon l'une quelconque des revendications précédentes, **caractérisé en ce que** le corps de palier de pivotement (60) est monté de manière à pouvoir pivoter au moyen du prolongement (62) sur la base de palier (32) autour de l'axe de pivotement (50), qu'en particulier le prolongement (62) présente sur un côté opposé au corps à complémentarité de forme (66) du corps de palier de pivotement (60) une zone de guidage (194), avec laquelle celui-ci est monté de manière à pouvoir pivoter par rapport à la base de palier (32) autour de l'axe de pivotement (50).

8. Attelage de remorque selon l'une quelconque des revendications précédentes, **caractérisé en ce que** le corps de palier de pivotement (60) présente un corps de guidage (220), avec lequel celui-ci est monté de manière à pouvoir pivoter par rapport à la base de palier (32) autour de l'axe de pivotement (50), qu'en particulier le corps de guidage (220) est monté sur une bague de palier (210) maintenue sur la base de palier (32).

9. Attelage de remorque selon l'une quelconque des revendications précédentes, **caractérisé en ce que** les surfaces d'appui (98) sont disposées sur une unité d'appui (90) disposée sur la base de palier (32), qu'en particulier l'unité d'appui (90) est disposée sur un côté de la base de palier (32) faisant face au support d'éléments à complémentarité de forme (80), et/ou qu'en particulier l'unité d'appui (90) est formée à partir d'au moins deux segments d'appui (92), qu'en particulier les segments d'appui (92) sont séparés par des points de séparation (96) et que ceux-ci présentent en particulier des surfaces d'appui (98) adjacentes aux points de séparation (96), qu'en particulier les corps de verrouillage (100) agissent sur l'unité d'appui (90) dans la zone d'un point de séparation (96) entre deux segments d'appui (92) et s'appuient sur des surfaces d'appui (98) des segments d'appui (92) disposées des deux côtés du point de séparation (96), qu'en particulier l'unité d'appui (90) bloque avec une zone de guidage (194) disposée sur un côté opposé au corps à complémentarité de forme (66) sur le prolongement (62) le prolongement (62) du corps de palier de pivotement (60) contre un déplacement hors du passage (64).

10. Attelage de remorque selon l'une quelconque des revendications précédentes, **caractérisé en ce qu'**un corps d'actionnement (140) pour les corps de verrouillage (100) est disposé dans le corps de guidage (120), qu'en particulier le corps d'actionnement (140) peut être déplacé par rapport au corps de guidage (120) et présente un contour d'actionnement (142) pour déplacer les corps de verrouillage (100) depuis la position de desserrage dans la position de blocage axial et inversement, qu'en particulier le contour d'actionnement (142) du corps d'actionnement (140) présente des surfaces d'actionnement (152, 154, 156, 158), dont la distance par rapport à l'axe de pivotement (50) varie de telle sorte que les corps de verrouillage (100) se trouvent dans la position de desserrage lorsqu'ils reposent sur une surface d'actionnement (152) située radialement à l'intérieur et dans la position de blocage axial lorsqu'ils reposent sur une surface d'actionnement (156, 158) située radialement à l'extérieur, qu'en particulier le corps d'actionnement (140) présente une surface d'actionnement (158) s'étendant avec une extension croissante parallèlement à l'axe de pivotement (50) à une distance radiale croissante par rapport à l'axe de pivotement (50), sur laquelle les corps de verrouillage (100) reposent dans la position de blocage axial, qu'en particulier le corps d'actionnement (140) est guidé de manière mobile sur le corps de guidage (120), qu'en particulier le corps d'actionnement (140) peut être déplacé parallèlement à l'axe de pivotement (50) par rapport aux corps de verrouillage (100), qu'en particulier les corps de verrouillage (100) peuvent être déplacés depuis la position de desserrage à la position de blocage axial et inversement par le déplacement du corps d'actionnement (140).

11. Attelage de remorque selon l'une quelconque des revendications précédentes, **caractérisé en ce que** le corps d'actionnement (140) peut être coulissé par un entraînement de coulissement (160) parallèlement à l'axe de pivotement (50), qu'en particulier l'entraînement de coulissement est un entraînement à broche (160), qu'en particulier l'entraînement à broche (160) présente une broche d'entraînement (162) et un écrou de broche (168) pouvant être déplacé parallèlement à l'axe de pivotement (50) pour le déplacement du corps d'actionnement (140), qu'en particulier la broche d'entraînement (162) traverse un passage du corps d'actionnement (140), qu'en particulier l'écrou de broche (168) est couplé rigidement au corps d'actionnement (140), qu'en particulier l'écrou de broche (168) agit sur le corps d'actionnement (140) par l'intermédiaire d'un élément élastique à ressort (172), qu'en particulier, lors du déplacement de l'écrou de broche (168) de la position de desserrage dans la position de blocage axial, le corps d'actionnement (140) est également déplacé depuis la position de desserrage à la position de blocage axial.

12. Attelage de remorque selon l'une quelconque des revendications précédentes, **caractérisé en ce que** lors du déplacement de l'écrou de broche (168) depuis la position de blocage axial dans la position de desserrage, le corps d'actionnement (140) est déplacé depuis la position de blocage axial dans la position de desserrage par au moins un corps de couplage (174) actif entre l'écrou de broche (168) et le corps d'actionnement (140), qu'en particulier le corps d'actionnement (140) et/ou l'écrou de broche (168) agissent sur le corps de palier de pivotement (60) à la suite d'un déplacement depuis la position de blocage axial dans la direction de la position de desserrage pour déplacer le corps de palier de pivotement depuis la position de fixation dans la position de libération pouvant être tournée autour de l'axe de pivotement (50), qu'en particulier le corps d'actionnement (140) et/ou l'écrou de broche (168) agissent sur le corps de palier de pivotement (60) à la suite d'un déplacement depuis la position de libération dans la direction de la position de fixation pour déplacer le corps de palier de pivotement depuis la position de desserrage dans la position de blocage axial.

13. Attelage de remorque selon l'une quelconque des revendications précédentes, **caractérisé en ce qu'**un pivotement du corps de palier de pivotement (60) depuis la position de travail (A) dans la position de repos (R) est effectué avec l'entraînement à broche (160) dans la position de libération, qu'en particulier un pivotement du corps de palier de pivotement (60) depuis la position de repos (R) dans la position de travail (A) est effectué avec l'entraînement à broche (160) dans la position de libération, qu'en particulier le pivotement du corps de palier de pivotement (60) est effectué au moyen de l'entraînement à broche (160) raison d'un blocage d'un coulissement de l'écrou de broche (168), qu'en particulier le blocage du coulissement de l'écrou de broche (168) est effectué dans la position de libération du corps de palier de pivotement (60), qu'en particulier lors d'un déplacement dans une direction de débrayage (AR) menant à la position de libération, une position de blocage d'un autre coulissement entraîne un déplacement par pivotement depuis la position de travail (A) dans la position de repos (R), qu'en particulier lors d'un déplacement dans une direction d'embrayage (ER) menant à l'écart de la position de libération, un blocage d'un autre coulissement entraîne un déplacement par pivotement depuis la position de repos (R) dans la position de travail (A).

14. Attelage de remorque selon l'une quelconque des revendications précédentes, **caractérisé en ce que** le corps de palier de pivotement (60) peut être fixé par une unité de fixation (250) par rapport à la base de palier (32), qu'en particulier l'unité de fixation (250) forme avec fixation le corps de palier de pivotement (60) dans la position de libération pouvant être pivotée autour de l'axe de pivotement (50) par rapport à la base de palier (32) dans la position de repos, qu'en particulier l'unité de fixation (250) forme avec fixation dans la position de travail par rapport à la base de palier (32) le corps de palier de pivotement (60) dans la position de libération pouvant être pivotée autour de l'axe de pivotement (50).
